# EUROPEAN PATENT APPLICATION

(11) **EP 3 128 410 A2**
(43) Date of publication of application: **08.02.2017**
(21) Application number: 16161717.0
(22) Date of filing: 22.03.2016
(51) Int. Cl.: G06F 3/0488, G06F 3/0481, G06F 3/0484

(54) **MOBILE TERMINAL AND CONTROL METHOD THEREOF**

(30) Priority: 13.07.2015 KR 20150099271
(71) Applicant: LG Electronics Inc., Seoul 07336 (KR)
(72) Inventor: LIM, Kyungah, 06772 Seoul (KR); KIM, Yoonhee, 06772 Seoul (KR); KIM, Sehee, 06772 Seoul (KR); LEE, Chulhee, 06772 Seoul (KR)
(74) Representative: Cabinet Plasseraud

(57) **Abstract**

A mobile terminal including a wireless communication unit configured to provide wireless communication; a touch screen configured to display a plurality of icons; and a controller configured to receive a predetermined touch input on a first icon of the plurality of icons, said predetermined touch input being different than a touch input for executing an application corresponding to the first icon, and display at least one graphic object on the touch screen representing an event that has occurred with respect to the application corresponding to the first icon.

## Description

### BACKGROUND OF THE INVENTION

### 1. Field of the Invention

The present disclosure relates to a mobile terminal having a touch screen formed to sense a touch and formed to display visual information, and a control method thereof.

### 2. Description of the Related Art

Terminals can be classified into two types, such as a mobile or portable terminal and a stationary terminal. Furthermore, the mobile terminal can be further classified into two types, such as a handheld terminal and a vehicle mounted terminal. As it becomes multifunctional, such a terminal can capture still images or moving images, play music or video files, play games, receive broadcast and the like, so as to be implemented as an integrated multimedia player. As it is implemented as a multimedia player, the terminal can output digital content in which various information forms such as texts, voices, images, videos, and the like are digitized in the unit of bits including "0" and "1" using at least one of visual, auditory and tactile modes.

In order to support and enhance the functions of the terminal, the improvement of structural or software elements of the terminal may be taken into consideration. Due to the improvement, the mobile terminal can display a list of recently executed applications, and the user can execute his or her desired function in a faster and more convenient manner using the list. The user can select any one application from the recently executed applications, thereby subsequently using a function that has been performed.

When any one application is selected, the user can access screen information that has been most recently displayed on the selected application. However, there is a problem in which the user cannot selectively access any one of screen information that has been displayed on the selected application. For example, when the user operates a browser again, a website that has been most recently accessed is displayed among websites that have been accessed using the browser. When the user wants to selectively access any one of websites that have been previously accessed, the user should first operate a browser, then search a webpage list that has been accessed, and select any one of the searched webpages. In other words, there is a problem in which the user can easily select an application desired to execute again but cannot select screen information desired to check again from screen information that has been displayed by a specific application.

### SUMMARY OF THE INVENTION

Accordingly, one object of the present disclosure is to solve the foregoing and other problems.

Another object of the present disclosure is to provide a mobile terminal and a control method thereof for allowing a user to visually check screen information that has been recently displayed on a specific application.

Still another object of the present disclosure is to provide a mobile terminal and a control method thereof for providing a user graphic interface allowing a user to easily find a thing for which he or she has just done on each application.

Yet still another object of the present disclosure is to provide a mobile terminal and a control method thereof for allowing a user to find a thing for which he or she has just done on an application for a predetermined time while displaying a home screen page.

In order to accomplish the task, a mobile terminal according to an embodiment of the present disclosure may include a touch screen formed to sense a touch, and configured to display screen information containing a plurality of icons, and a controller configured to select an application linked with any one of the plurality of icons when a predetermined touch input is received at the any one icon, and display information associated with an event that has occurred on the selected application on one region of the touch screen.

In an embodiment, wherein the controller is further configured to: display a home screen including the plurality of icons, and display an image including the at least one graphic object partially covering the home screen, in response to the received predetermined touch input.

In an embodiment, wherein when a plurality of events have occurred on the application corresponding to the first icon, the controller is further configured to display a plurality of graphic objects representing the plurality of events in a time sequence at which the events occurred.

In an embodiment, wherein the controller is further configured to: receive a touch input on a first graphic object of the displayed plurality of graphic objects, and display an execution screen related to the first graphic object.

In an embodiment, wherein the controller is further configured to scroll the plurality of graphic objects in response to a rotationally touch and drag on the image including the plurality of graphic objects.

In an embodiment, wherein the predetermined touch input comprises a circular touch and drag on the first icon.

In an embodiment, wherein the controller is further configured to: display a plurality of time indices indicating a time on the touch screen, receive a touch input applied to at least one of the plurality of time indices, and display only graphic objects corresponding to events that have occurred within a time period defined by the touch input applied to the at least one of the plurality of time indices.

In an embodiment, wherein the controller is further configured to display the at least one graphic object while the predetermined touch input in maintained without being released, and stop displaying the at least one graphic object when the predetermined touch input is released.

In an embodiment, wherein the controller is further configured to: receive a touch input on the at least one graphic object, display an external terminal graphic object indicating an external terminal, and transmit event information about the event that has occurred with respect to the application to the external terminal in response to the touch input being dragged to the external terminal graphic object.

In an embodiment, wherein the controller is further configured to: display an application graphic object indicating a communication application, and transmit the event information to the external terminal using the communication application in response to the touch input being dragged to the application graphic object.

In an embodiment, wherein the controller is further configured to display the at least one graphic object in a first portion of the touch screen and display screen information previously displayed on the touch screen in a second portion different than the first portion.

In an embodiment, wherein the controller is further configured to: receive a touch input of the at least one graphic object, and display an execution screen of an application corresponding to the at least one graphic object in the second portion in response to the received touch input.

Furthermore, a mobile terminal according to an embodiment of the present disclosure may include a touch screen formed to sense a touch, and configured to display screen information, and a controller configured to control the touch screen to display an image covering part of the screen information when a predetermined touch input is received at the touch screen, wherein the controller displays graphic objects satisfying a first condition in a first region of the image and displays graphic objects satisfying a second condition in a second region of the image, and selects any one of the graphic objects satisfying the first condition as a first graphic object based on a first touch applied to the first region and selects any one of the graphic objects satisfying the second condition as a second graphic object based on a second touch consecutively moving toward one position of the second region from the first touch, and performs a function associated with the first and the second graphic object when the second touch is released.

In an embodiment, wherein the controller is further configured to display a third tray of graphic objects satisfying a third condition in a third region of the touch screen.

In an embodiment, wherein the touch and drag input is from the one graphic object in the first tray to the other graphic object in the second tray and then to a graphic object in the third tray.

In an embodiment, wherein the graphic objects satisfying the first condition are associated with different digital contents that can be output in any one of visual, auditory and tactile modes, the graphic objects satisfying the second condition are associated with different communication applications, and the graphic objects satisfying the third condition are associated with contacts.

In an embodiment, wherein the controller is further configured to transfer a digital content corresponding to the one graphic object in the first tray to a corresponding contact to the graphic object in the third tray using a communication application corresponding to the graphic object in the second tray in response to the touch and drag input.

In an embodiment, wherein the controller is further configured to display a new graphic object in the first tray in response to a new digital content being received.

In an embodiment, wherein the controller is further configured to change a position of the first tray with respect to the second tray based on a preset touch input to the first tray.

In an embodiment, wherein the controller is further configured to: receive a touch and drag input of content included in the displayed screen information to the first tray, and display a new graphic object in the first tray corresponding to the content included in the displayed screen information.

Effects to be achieved in the present disclosure will not be limited to the foregoing effects, and other effects which are not mentioned will become apparent from the following description by a person skilled in the art to which the present disclosure belongs.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1A is a block diagram illustrating a mobile terminal associated with the present disclosure;
FIGS. 1B and 1C are conceptual views illustrating an example in which a mobile terminal associated with an embodiment of the present disclosure is seen from different directions;
FIG. 2 is a conceptual view illustrating a modified example of a mobile terminal according to an embodiment of the present disclosure;
FIG. 3 is a perspective view illustrating an example of a wearable device as a watch-type mobile terminal associated with another embodiment of the present disclosure;
FIG. 4 is a flow chart illustrating a control method of a mobile terminal implemented by an embodiment of the present disclosure;
FIGS. 5A through 5E are exemplary views illustrating the operation of a mobile terminal according to the control method of FIG. 4;
FIGS. 6A and 6B are exemplary views illustrating the operation of a mobile terminal when a predetermined touch input is applied to a folder icon;
FIGS. 7A and 7B are views illustrating a method of controlling information associated with an event;
FIGS. 8 through 10B are views illustrating a method of executing a function linked with information associated with an event;
FIGS. 11A through 12 are views illustrating a method of setting a period of time to be searched;
FIG. 13 is a flow chart illustrating a control method of a mobile terminal according to an embodiment of the present disclosure;
FIGS. 14, 15A, 15B, 15C, 15D and 15E are conceptual views illustrating a control method illustrated in FIG. 13;
FIG. 16 is a conceptual view illustrating an operation according to a drag input applied to any one of a plurality of regions on an image displayed by a predetermined touch input in a mobile terminal according to an embodiment of the present disclosure;
FIGS. 17A, 17B and 17C are conceptual views illustrating an operation according to a user input applied to screen information and an image when the image is displayed by a predetermined touch input when the screen information is displayed on a mobile terminal according to an embodiment of the present disclosure; and
FIGS. 18A and 18B are conceptual views illustrating an operation of changing the type of graphic objects displayed on an image according to the type of screen information when the image is displayed by a predetermined touch input when the screen information is displayed on a mobile terminal according to an embodiment of the present disclosure.

### DETAILED DESCRIPTION OF THE INVENTION

Description will now be given in detail according to the exemplary embodiments disclosed herein, with reference to the accompanying drawings. For the sake of brief description with reference to the drawings, the same or equivalent components will be provided with the same reference numbers, and description thereof will not be repeated. A suffix "module" and "unit" used for constituent elements disclosed in the following description is merely intended for easy description of the specification, and the suffix itself does not give any special meaning or function. The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

It will be understood that, although the terms first, second, etc. may be used herein to describe various elements, these elements should not be limited by these terms. These terms are only used to distinguish one element from another. When an element is referred to as being "connected with" another element, the element can be directly connected with the other element or intervening elements may also be present. In contrast, when an element is referred to as being "directly connected with" another element, there are no intervening elements present.

A singular representation may include a plural representation as far as it represents a definitely different meaning from the context. Terms 'include' or 'has' used herein should be understood that they are intended to indicate an existence of several components or several steps, disclosed in the specification, and it may also be understood that part of the components or steps may not be included or additional components or steps may further be included.

Mobile terminals described herein may include cellular phones, smart phones, laptop computers, digital broadcasting terminals, personal digital assistants (PDAs), portable multimedia players (PMPs), navigators, slate PCs, tablet PCs, ultra books, wearable devices (for example, smart watches, smart glasses, head mounted displays (HMDs)), and the like. However, embodiments of this specification can also be applied to stationary terminals such as digital TV, desktop computers and the like, excluding a case of being applicable only to the mobile terminals.

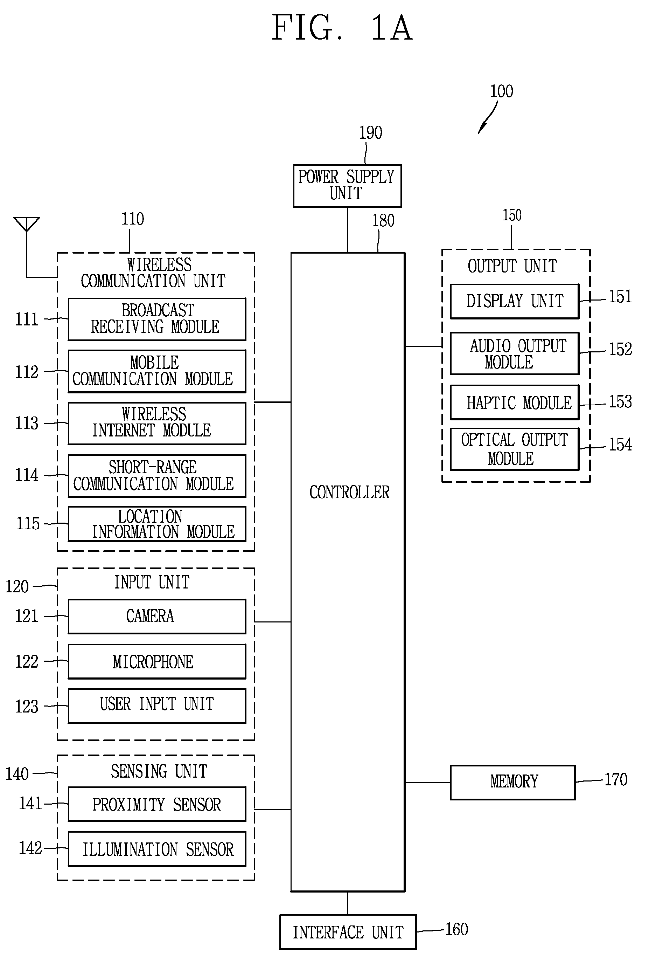

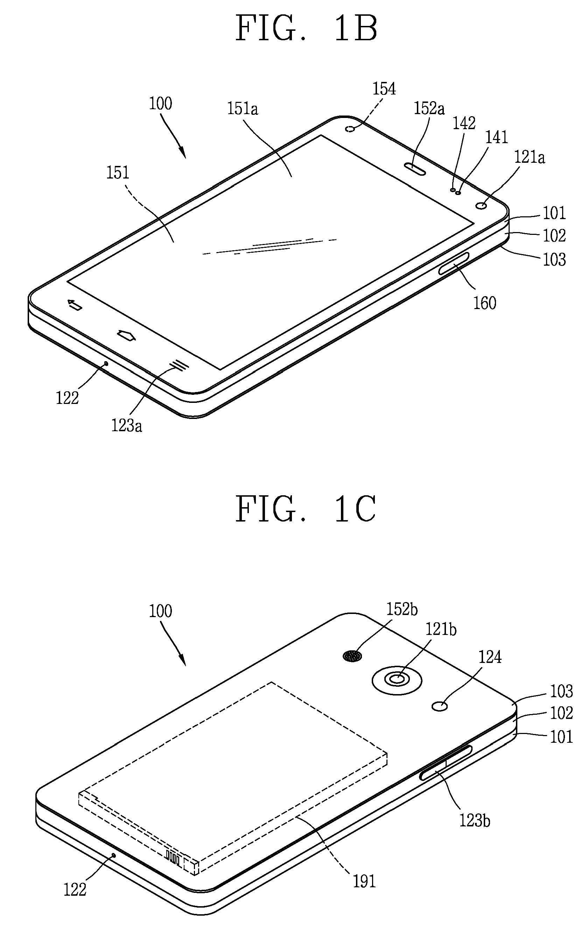

FIG. 1A is a block diagram of a mobile terminal in accordance with the present disclosure, FIGS. 1B and 1C are conceptual views of one example of the mobile terminal, viewed from different directions. The mobile terminal 100 may include components, such as a wireless communication unit 110, an input unit 120, a sensing unit 140, an output unit 150, an interface unit 160, a memory 170, a controller 180, a power supply unit 190 and the like. FIG. 1A illustrates the mobile terminal having various components, but it may be understood that implementing all of the illustrated components is not a requirement. Greater or fewer components may alternatively be implemented.

In more detail, the wireless communication unit 110 of those components may typically include one or more modules which permit wireless communications between the mobile terminal 100 and a wireless communication system, between the mobile terminal 100 and another mobile terminal 100, or between the mobile terminal 100 and a network within which another mobile terminal 100 (or an external server) is located.

For example, the wireless communication unit 110 may include at least one of a broadcast receiving module 111, a mobile communication module 112, a wireless Internet module 113, a short-range communication module 114, a location information module 115 and the like. The input unit 120 may include a camera 121 for inputting an image signal, a microphone 122 or an audio input module for inputting an audio signal, or a user input unit 123 (for example, a touch key, a push key (or a mechanical key), etc.) for allowing a user to input information. Audio data or image data collected by the input unit 120 may be analyzed and processed by a user's control command.

The sensing unit 140 may include at least one sensor which senses at least one of internal information of the mobile terminal, a surrounding environment of the mobile terminal and user information. For example, the sensing unit 140 may include a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, refer to the camera 121), a microphone 122, a battery gage, an environment sensor (for example, a barometer, a hygrometer, a thermometer, a radiation detection sensor, a thermal sensor, a gas sensor, etc.), and a chemical sensor (for example, an electronic nose, a health care sensor, a biometric sensor, etc.). Further, the mobile terminal disclosed herein may utilize information in such a manner of combining information sensed by at least two sensors of those sensors.

The output unit 150 may be configured to output an audio signal, a video signal or a tactile signal. The output unit 150 may include a display unit 151, an audio output module 152, a haptic module 153, an optical output module 154 and the like. The display unit 151 may have an inter-layered structure or an integrated structure with a touch sensor so as to implement a touch screen. The touch screen may provide an output interface between the mobile terminal 100 and a user, as well as functioning as the user input unit 123 which provides an input interface between the mobile terminal 100 and the user.

The interface unit 160 may serve as an interface with various types of external devices connected with the mobile terminal 100. The interface unit 160, for example, may include wired or wireless headset ports, external power supply ports, wired or wireless data ports, memory card ports, ports for connecting a device having an identification module, audio input/output (I/O) ports, video I/O ports, earphone ports, or the like. The mobile terminal 100 may execute an appropriate control associated with a connected external device, in response to the external device being connected to the interface unit 160.

The memory 170 may store a plurality of application programs (or applications) executed in the mobile terminal 100, data for operations of the mobile terminal 100, instruction words, and the like. At least some of those application programs may be downloaded from an external server via wireless communication. Some others of those application programs may be installed within the mobile terminal 100 at the time of being shipped for basic functions of the mobile terminal 100 (for example, receiving a call, placing a call, receiving a message, sending a message, etc.). Further, the application programs may be stored in the memory 170, installed in the mobile terminal 100, and executed by the controller 180 to perform an operation (or a function) of the mobile terminal 100.

The controller 180 can typically control an overall operation of the mobile terminal 100 in addition to the operations associated with the application programs. The controller 180 can provide or process information or functions appropriate for a user by processing signals, data, information and the like, which are input or output by the aforementioned components, or activating the application programs stored in the memory 170.

The controller 180 can control at least part of the components illustrated in FIG. 1, in order to drive the application programs stored in the memory 170. In addition, the controller 180 can drive the application programs by combining at least two of the components included in the mobile terminal 100 for operation.

The power supply unit 190 may receive external power or internal power and supply appropriate power required for operating respective elements and components included in the mobile terminal 100 under the control of the controller 180. The power supply unit 190 may include a battery, and the battery may be an embedded battery or a replaceable battery.

At least part of those elements and components may be combined to implement operation and control of the mobile terminal or a control method of the mobile terminal according to various exemplary embodiments described herein. Also, the operation and control or the control method of the mobile terminal may be implemented in the mobile terminal in such a manner of activating at least one application program stored in the memory 170.

Hereinafter, each aforementioned component will be described in more detail with reference to FIG. 1A, prior to explaining various exemplary embodiments implemented by the mobile terminal 100 having the configuration. First, the wireless communication unit 110 will be described. The broadcast receiving module 111 of the wireless communication unit 110 may receive a broadcast signal and/or broadcast associated information from an external broadcast managing entity via a broadcast channel. The broadcast channel may include a satellite channel and a terrestrial channel. At least two broadcast receiving modules 111 may be provided in the mobile terminal 100 to simultaneously receive at least two broadcast channels or switch the broadcast channels.

The mobile communication module 112 may transmit/receive wireless signals to/from at least one of network entities, for example, a base station, an external mobile terminal, a server, and the like, on a mobile communication network, which is constructed according to technical standards or transmission methods for mobile communications (for example, Global System for Mobile Communication (GSM), Code Division Multi Access (CDMA), Wideband CDMA (WCDMA), High Speed Downlink Packet access (HSDPA), Long Term Evolution (LTE), etc.)

Here, the wireless signals may include audio call signal, video (telephony) call signal, or various formats of data according to transmission/reception of text/multimedia messages. The wireless Internet module 113 denotes a module for wireless Internet access. This module may be internally or externally coupled to the mobile terminal 100. The wireless Internet module 113 may transmit/receive wireless signals via communication networks according to wireless Internet technologies.

Examples of such wireless Internet access may include Wireless LAN (WLAN), Wireless Fidelity (Wi-Fi) Direct, Digital Living Network Alliance (DLNA), Wireless Broadband (Wibro), Worldwide Interoperability for Microwave Access (Wimax), High Speed Downlink Packet Access (HSDPA), Long Term Evolution (LTE), and the like. The wireless Internet module 113 may transmit/receive data according to at least one wireless Internet technology within a range including even Internet technologies which are not aforementioned.

From the perspective that the wireless Internet accesses according to Wibro, HSDPA, GSM, CDMA, WCDMA, LET and the like are executed via a mobile communication network, the wireless Internet module 113 which performs the wireless Internet access via the mobile communication network may be understood as a type of the mobile communication module 112.

The short-range communication module 114 denotes a module for short-range communications. Suitable technologies for implementing the short-range communications may include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, and the like. The short-range communication module 114 may support wireless communications between the mobile terminal 100 and a wireless communication system, between the mobile terminal 100 and another mobile terminal 100, or between the mobile terminal and a network where another mobile terminal 100 (or an external server) is located, via wireless personal area networks.

Here, the another mobile terminal 100 may be a wearable device, for example, a smart watch, a smart glass or a head mounted display (HMD), which can exchange data with the mobile terminal 100 (or to cooperate with the mobile terminal 100). The short-range communication module 114 may sense (recognize) a wearable device, which can communicate with the mobile terminal), near the mobile terminal 100. In addition, when the sensed wearable device is a device which is authenticated to communicate with the mobile terminal 100 according to an embodiment of the present disclosure, the controller 180 can transmit at least part of data processed in the mobile terminal 100 to the wearable device via the short-range communication module 114. Hence, a user of the wearable device may use the data processed in the mobile terminal 100 on the wearable device. For example, when a call is received in the mobile terminal 100, the user can answer the call using the wearable device. Also, when a message is received in the mobile terminal 100, the user can check the received message using the wearable device.

The location information module 115 denotes a module for detecting or calculating a position of the mobile terminal. An example of the location information module 115 may include a Global Position System (GPS) module or a Wi-Fi module. For example, when the mobile terminal uses the GPS module, a position of the mobile terminal may be acquired using a signal sent from a GPS satellite. As another example, when the mobile terminal uses the Wi-Fi module, a position of the mobile terminal may be acquired based on information related to a wireless access point (AP) which transmits or receives a wireless signal to or from the Wi-Fi module.

Hereinafter, the input unit 120 will be described in more detail. The input unit 120 may be configured to provide an audio or video signal (or information) input to the mobile terminal or information input by a user to the mobile terminal. For the input of the audio information, the mobile terminal 100 may include one or a plurality of cameras 121. The camera 121 may process image frames of still pictures or video obtained by image sensors in a video call mode or a capture mode. The processed image frames may be displayed on the display unit 151. Further, the plurality of cameras 121 disposed in the mobile terminal 100 may be arranged in a matrix configuration. By use of the cameras 121 having the matrix configuration, a plurality of image information having various angles or focal points may be input into the mobile terminal 100. Also, the plurality of cameras 121 may be arranged in a stereoscopic structure to acquire a left image and a right image for implementing a stereoscopic image.

The microphone 122 may process an external audio signal into electric audio data. The processed audio data may be utilized in various manners according to a function being executed in the mobile terminal 100 (or an application program being executed). Further, the microphone 122 may include assorted noise removing algorithms to remove noise generated in the course of receiving the external audio signal.

The user input unit 123 may receive information input by a user. When information is input through the user input unit 123, the controller 180 can control an operation of the mobile terminal 100 to correspond to the input information. The user input unit 123 may include a mechanical input element (or a mechanical key, for example, a button located on a front/rear surface or a side surface of the mobile terminal 100, a dome switch, a jog wheel, a jog switch, etc.), and a touch-sensitive input means. As one example, the touch-sensitive input means may be a virtual key, a soft key or a visual key, which is displayed on a touch screen through software processing, or a touch key which is disposed on a portion except for the touch screen. Further, the virtual key or the visual key may be displayable on the touch screen in various shapes, for example, graphic, text, icon, video or a combination thereof.

The sensing unit 140 may sense at least one of internal information of the mobile terminal, surrounding environment information of the mobile terminal and user information, and generate a sensing signal corresponding to it. The controller 180 can control an operation of the mobile terminal 100 or execute data processing, a function or an operation associated with an application program installed in the mobile terminal based on the sensing signal. Hereinafter, description will be given in more detail of representative sensors of various sensors which may be included in the sensing unit 140.

First, a proximity sensor 141 refers to a sensor to sense presence or absence of an object approaching to a surface to be sensed, or an object disposed near a surface to be sensed, by using an electromagnetic field or infrared rays without a mechanical contact. The proximity sensor 141 may be arranged at an inner region of the mobile terminal covered by the touch screen, or near the touch screen. The proximity sensor 141 may have a longer lifespan and a more enhanced utility than a contact sensor.

The proximity sensor 141, for example, may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, the proximity sensor 141 may sense proximity of a pointer to the touch screen by changes of an electromagnetic field, which is responsive to an approach of an object with conductivity. In this instance, the touch screen (touch sensor) may be categorized into a proximity sensor.

Hereinafter, for the sake of brief explanation, a status that the pointer is positioned to be proximate onto the touch screen without contact will be referred to as 'proximity touch,' whereas a status that the pointer substantially comes in contact with the touch screen will be referred to as 'contact touch.' For the position corresponding to the proximity touch of the pointer on the touch screen, such position will correspond to a position where the pointer faces perpendicular to the touch screen upon the proximity touch of the pointer. The proximity sensor 141 may sense proximity touch, and proximity touch patterns (e.g., distance, direction, speed, time, position, moving status, etc.). Further, the controller 180 can process data (or information) corresponding to the proximity touches and the proximity touch patterns sensed by the proximity sensor 141, and output visual information corresponding to the process data on the touch screen. In addition, the controller 180 can control the mobile terminal 100 to execute different operations or process different data (or information) according to whether a touch with respect to the same point on the touch screen is either a proximity touch or a contact touch.

A touch sensor may sense a touch (or touch input) applied onto the touch screen (or the display unit 151) using at least one of various types of touch methods, such as a resistive type, a capacitive type, an infrared type, a magnetic field type, and the like. As one example, the touch sensor may be configured to convert changes of pressure applied to a specific part of the display unit 151 or a capacitance occurring from a specific part of the display unit 151, into electric input signals. Also, the touch sensor may be configured to sense not only a touched position and a touched area, but also touch pressure. Here, a touch object is an object to apply a touch input onto the touch sensor. Examples of the touch object may include a finger, a touch pen, a stylus pen, a pointer or the like.

When touch inputs are sensed by the touch sensors, corresponding signals may be transmitted to a touch controller. The touch controller may process the received signals, and then transmit corresponding data to the controller 180. Accordingly, the controller 180 can sense which region of the display unit 151 has been touched. Here, the touch controller may be a component separate from the controller 180 or the controller 180 itself.

Further, the controller 180 can execute a different control or the same control according to a type of an object which touches the touch screen (or a touch key provided in addition to the touch screen). Whether to execute the different control or the same control according to the object which gives a touch input may be decided based on a current operating state of the mobile terminal 100 or a currently executed application program.

Meanwhile, the touch sensor and the proximity sensor may be executed individually or in combination, to sense various types of touches, such as a short (or tap) touch, a long touch, a multi-touch, a drag touch, a flick touch, a pinch-in touch, a pinch-out touch, a swipe touch, a hovering touch, and the like.

An ultrasonic sensor may be configured to recognize position information relating to a sensing object by using ultrasonic waves. The controller 180 can calculate a position of a wave generation source based on information sensed by an illumination sensor and a plurality of ultrasonic sensors. Since light is much faster than ultrasonic waves, a time for which the light reaches the optical sensor may be much shorter than a time for which the ultrasonic wave reaches the ultrasonic sensor. The position of the wave generation source may be calculated using the fact. In more detail, the position of the wave generation source may be calculated by using a time difference from the time that the ultrasonic wave reaches based on the light as a reference signal.

The camera 121 constructing the input unit 120 may be a type of camera sensor. The camera sensor may include at least one of a photo sensor and a laser sensor. The camera 121 and the laser sensor may be combined to detect a touch of the sensing object with respect to a 3D stereoscopic image. The photo sensor may be laminated on the display device. The photo sensor may be configured to scan a movement of the sensing object in proximity to the touch screen. In more detail, the photo sensor may include photo diodes and transistors at rows and columns to scan content placed on the photo sensor by using an electrical signal which changes according to the quantity of applied light. Namely, the photo sensor may calculate the coordinates of the sensing object according to variation of light to thus obtain position information of the sensing object.

The display unit 151 may output information processed in the mobile terminal 100. For example, the display unit 151 may display execution screen information of an application program driven in the mobile terminal 100 or user interface (UI) and graphic user interface (GUI) information in response to the execution screen information.

The display unit 151 may also be implemented as a stereoscopic display unit for displaying stereoscopic images. The stereoscopic display unit 152 may employ a stereoscopic display scheme such as stereoscopic scheme (a glass scheme), an auto-stereoscopic scheme (glassless scheme), a projection scheme (holographic scheme), or the like.

The audio output module 152 may output audio data received from the wireless communication unit 110 or stored in the memory 160 in a call signal reception mode, a call mode, a record mode, a voice recognition mode, a broadcast reception mode, and the like. Also, the audio output module 152 may also provide audible output signals related to a particular function (e.g., a call signal reception sound, a message reception sound, etc.) performed by the mobile terminal 100. The audio output module 152 may include a receiver, a speaker, a buzzer or the like.

A haptic module 153 may generate various tactile effects the user can feel. A typical example of the tactile effect generated by the haptic module 153 may be vibration. Strength, pattern and the like of the vibration generated by the haptic module 153 may be controllable by a user selection or setting of the controller. For example, the haptic module 153 may output different vibrations in a combining manner or a sequential manner.

Besides vibration, the haptic module 153 may generate various other tactile effects, including an effect by stimulation such as a pin arrangement vertically moving with respect to a contact skin, a spray force or suction force of air through a jet orifice or a suction opening, a touch on the skin, a contact of an electrode, electrostatic force, etc., an effect by reproducing the sense of cold and warmth using an element that can absorb or generate heat, and the like.

The haptic module 153 may be implemented to allow the user to feel a tactile effect through a muscle sensation such as the user's fingers or arm, as well as transferring the tactile effect through a direct contact. Two or more haptic modules 153 may be provided according to the configuration of the mobile terminal 100.

An optical output module 154 may output a signal for indicating an event generation using light of a light source. Examples of events generated in the mobile terminal 100 may include a message reception, a call signal reception, a missed call, an alarm, a schedule notice, an email reception, an information reception through an application, and the like. A signal output by the optical output module 154 may be implemented so the mobile terminal emits monochromatic light or light with a plurality of colors. The signal output may be terminated as the mobile terminal senses a user's event checking.

The interface unit 160 may serve as an interface with every external device connected with the mobile terminal 100. For example, the interface unit 160 may receive data transmitted from an external device, receive power to transfer to each element within the mobile terminal 100, or transmit internal data of the mobile terminal 100 to an external device. For example, the interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (referred to as 'identifying device', hereinafter) may take the form of a smart card. Accordingly, the identifying device may be connected with the terminal 100 via the interface unit 160.

When the mobile terminal 100 is connected with an external cradle, the interface unit 160 may serve as a passage to allow power from the cradle to be supplied to the mobile terminal 100 therethrough or may serve as a passage to allow various command signals input by the user from the cradle to be transferred to the mobile terminal therethrough. Various command signals or power input from the cradle may operate as signals for recognizing that the mobile terminal is properly mounted on the cradle.

The memory 170 may store programs for operations of the controller 180 and temporarily store input/output data (for example, phonebook, messages, still images, videos, etc.). The memory 170 may store data related to various patterns of vibrations and audio which are output in response to touch inputs on the touch screen.

The memory 170 may include at least one type of storage medium including a Flash memory, a hard disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 170 over the Internet.

As aforementioned, the controller 180 can typically control the general operations of the mobile terminal 100. For example, the controller 180 can set or release a lock state for restricting a user from inputting a control command with respect to applications when a status of the mobile terminal meets a preset condition.

The controller 180 can also perform controlling and processing associated with voice calls, data communications, video calls, and the like, or perform pattern recognition processing to recognize a handwriting input or a picture drawing input performed on the touch screen as characters or images, respectively. In addition, the controller 180 can control one or combination of those components in order to implement various exemplary embodiment disclosed herein on the mobile terminal 100.

The power supply unit 190 may receive external power or internal power and supply appropriate power required for operating respective elements and components included in the mobile terminal 100 under the control of the controller 180. The power supply unit 190 may include a battery. The battery may be an embedded battery which is rechargeable or be detachably coupled to the terminal body for charging.

The power supply unit 190 may include a connection port. The connection port may be configured as one example of the interface unit 160 to which an external (re)charger for supplying power to recharge the battery is electrically connected. As another example, the power supply unit 190 may be configured to recharge the battery in a wireless manner without use of the connection port. Here, the power supply unit 190 may receive power, transferred from an external wireless power transmitter, using at least one of an inductive coupling method which is based on magnetic induction or a magnetic resonance coupling method which is based on electromagnetic resonance. Various embodiments described herein may be implemented in a computer-readable or its similar medium using, for example, software, hardware, or any combination thereof.

Referring to FIGS. 1B and 1C, the mobile terminal 100 disclosed herein may be provided with a bar-type terminal body. However, the present disclosure may not be limited to this, but also may be applicable to various structures such as watch type, clip type, glasses type or folder type, flip type, slide type, swing type, swivel type, or the like, in which two and more bodies are combined with each other in a relatively movable manner.

Here, the terminal body may be understood as a conception which indicates the mobile terminal 100 as at least one assembly. The mobile terminal 100 may include a case (casing, housing, cover, etc.) forming the appearance of the terminal. In this embodiment, the case may be divided into a front case 101 and a rear case 102. Various electronic components may be incorporated into a space formed between the front case 101 and the rear case 102. At least one middle case may be additionally disposed between the front case 101 and the rear case 102

A display unit 151 may be disposed on a front surface of the terminal body to output information. As illustrated, a window 151a of the display unit 151 may be mounted to the front case 101 so as to form the front surface of the terminal body together with the front case 101. In some cases, electronic components may also be mounted to the rear case 102. Examples of those electronic components mounted to the rear case 102 may include a detachable battery, an identification module, a memory card and the like. Here, a rear cover 103 for covering the electronic components mounted may be detachably coupled to the rear case 102. Therefore, when the rear cover 103 is detached from the rear case 102, the electronic components mounted to the rear case 102 may be externally exposed.

As illustrated, when the rear cover 103 is coupled to the rear case 102, a side surface of the rear case 102 may be partially exposed. In some cases, upon the coupling, the rear case 102 may also be completely shielded by the rear cover 103. Further, the rear cover 103 may include an opening for externally exposing a camera 121b or an audio output module 152b.

The cases 101, 102, 103 may be formed by injection-molding synthetic resin or may be formed of a metal, for example, stainless steel (STS), titanium (Ti), or the like. Unlike the example which the plurality of cases form an inner space for accommodating such various components, the mobile terminal 100 may be configured such that one case forms the inner space. In this example, a mobile terminal 100 having a uni-body formed so synthetic resin or metal extends from a side surface to a rear surface may also be implemented.

Further, the mobile terminal 100 may include a waterproofing unit for preventing an introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The mobile terminal may include a display unit 151, first and second audio output modules 152a and 152b, a proximity sensor 141, an illumination sensor 152, an optical output module 154, first and second cameras 121a and 121b, first and second manipulation units 123a and 123b, a microphone 122, an interface unit 160 and the like.

Hereinafter, description will be given of an exemplary mobile terminal 100 that the display unit 151, the first audio output module 152a, the proximity sensor 141, the illumination sensor 142, the optical output module 154, the first camera 121a and the first manipulation unit 123a are disposed on the front surface of the terminal body, the second manipulation unit 123b, the microphone 122 and the interface unit 160 are disposed on a side surface of the terminal body, and the second audio output module 152b and the second camera 121b are disposed on a rear surface of the terminal body, with reference to FIGS. 1B and 1C.

Here, those components may not be limited to the arrangement, but be excluded or arranged on another surface if necessary. For example, the first manipulation unit 123a may not be disposed on the front surface of the terminal body, and the second audio output module 152b may be disposed on the side surface other than the rear surface of the terminal body.

The display unit 151 may output information processed in the mobile terminal 100. For example, the display unit 151 may display execution screen information of an application program driven in the mobile terminal 100 or user interface (UI) and graphic user interface (GUI) information in response to the execution screen information. The display unit 151 may include at least one of a liquid crystal display (LCD), a thin film transistor-liquid crystal display (TFT-LCD), an organic light emitting diode (OLED), a flexible display, a 3-dimensional (3D) display, and an e-ink display.

The display unit 151 may be implemented in two or more in number according to a configured aspect of the mobile terminal 100. For instance, a plurality of the display units 151 may be arranged on one surface to be spaced apart from or integrated with each other, or may be arranged on different surfaces. The display unit 151 may include a touch sensor which senses a touch onto the display unit so as to receive a control command in a touching manner. When a touch is input to the display unit 151, the touch sensor may be configured to sense this touch and the controller 180 can generate a control command corresponding to the touch. The content which is input in the touching manner may be a text or numerical value, or a menu item which can be indicated or designated in various modes.

The touch sensor may be configured in a form of film having a touch pattern. The touch sensor may be a metal wire, which is disposed between the window 151a and a display on a rear surface of the window 151a or patterned directly on the rear surface of the window 151a. Or, the touch sensor may be integrally formed with the display. For example, the touch sensor may be disposed on a substrate of the display or within the display.

The display unit 151 may form a touch screen together with the touch sensor. Here, the touch screen may serve as the user input unit 123 (see FIG. 1A). Therefore, the touch screen may replace at least some of functions of the first manipulation unit 123a. The first audio output module 152a may be implemented in the form of a receiver for transferring voice sounds to the user's ear or a loud speaker for outputting various alarm sounds or multimedia reproduction sounds.

The window 151a of the display unit 151 may include a sound hole for emitting sounds generated from the first audio output module 152a. Here, the present disclosure may not be limited to this. It may also be configured such that the sounds are released along an assembly gap between the structural bodies (for example, a gap between the window 151a and the front case 101). In this instance, a hole independently formed to output audio sounds may not be seen or hidden in terms of appearance, thereby further simplifying the appearance of the mobile terminal 100.

The optical output module 154 may output light for indicating an event generation. Examples of the event generated in the mobile terminal 100 may include a message reception, a call signal reception, a missed call, an alarm, a schedule notice, an email reception, information reception through an application, and the like. When a user's event checking is sensed, the controller may control the optical output unit 154 to stop the output of the light.

The first camera 121a may process video frames such as still or moving images obtained by the image sensor in a video call mode or a capture mode. The processed video frames may be displayed on the display unit 151 or stored in the memory 170. The first and second manipulation units 123a and 123b are examples of the user input unit 123, which may be manipulated by a user to input a command for controlling the operation of the mobile terminal 100. The first and second manipulation units 123a and 123b may also be commonly referred to as a manipulating portion, and may employ any method if it is a tactile manner allowing the user to perform manipulation with a tactile feeling such as touch, push, scroll or the like.

The drawings are illustrated on the basis that the first manipulation unit 123a is a touch key, but the present disclosure is not limited to this. For example, the first manipulation unit 123a may be configured with a mechanical key, or a combination of a touch key and a push key. The content received by the first and second manipulation units 123a and 123b may be set in various ways. For example, the first manipulation unit 123a may be used by the user to input a command such as menu, home key, cancel, search, or the like, and the second manipulation unit 123b may be used by the user to input a command, such as controlling a volume level being output from the first or second audio output module 152a or 152b, switching into a touch recognition mode of the display unit 151, or the like.

Further, as another example of the user input unit 123, a rear input unit may be disposed on the rear surface of the terminal body. The rear input unit may be manipulated by a user to input a command for controlling an operation of the mobile terminal 100. The content input may be set in various ways. For example, the rear input unit may be used by the user to input a command, such as power on/off, start, end, scroll or the like, controlling a volume level being output from the first or second audio output module 152a or 152b, switching into a touch recognition mode of the display unit 151, or the like. The rear input unit may be implemented into a form allowing a touch input, a push input or a combination thereof.

The rear input unit may be disposed to overlap the display unit 151 of the front surface in a thickness direction of the terminal body. As one example, the rear input unit may be disposed on an upper end portion of the rear surface of the terminal body such that a user can easily manipulate it using a forefinger when the user grabs the terminal body with one hand. However, the present disclosure may not be limited to this, and the position of the rear input unit may be changeable.

When the rear input unit is disposed on the rear surface of the terminal body, a new user interface may be implemented using the rear input unit. Also, the aforementioned touch screen or the rear input unit may substitute for at least part of functions of the first manipulation unit 123a located on the front surface of the terminal body. Accordingly, when the first manipulation unit 123a is not disposed on the front surface of the terminal body, the display unit 151 may be implemented to have a larger screen.

Further, the mobile terminal 100 may include a finger scan sensor which scans a user's fingerprint. The controller may use fingerprint information sensed by the finger scan sensor as an authentication means. The finger scan sensor may be installed in the display unit 151 or the user input unit 123. The microphone 122 may be formed to receive the user's voice, other sounds, and the like. The microphone 122 may be provided at a plurality of places, and configured to receive stereo sounds.

The interface unit 160 may serve as a path allowing the mobile terminal 100 to exchange data with external devices. For example, the interface unit 160 may be at least one of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b may be further mounted to the rear surface of the terminal body. The second camera 121b may have an image capturing direction, which is substantially opposite to the direction of the first camera unit 121 a. The second camera 121b may include a plurality of lenses arranged along at least one line. The plurality of lenses may also be arranged in a matrix configuration. The cameras may be referred to as an 'array camera.' When the second camera 121b is implemented as the array camera, images may be captured in various manners using the plurality of lenses and images with better qualities may be obtained.

A flash 124 may be disposed adjacent to the second camera 121b. When an image of a subject is captured with the camera 121b, the flash 124 may illuminate the subject. The second audio output module 152b may further be disposed on the terminal body. The second audio output module 152b may implement stereophonic sound functions in conjunction with the first audio output module 152a (refer to FIG. 1A), and may be also used for implementing a speaker phone mode for call communication.

At least one antenna for wireless communication may be disposed on the terminal body. The antenna may be installed in the terminal body or formed on the case. For example, an antenna which configures a part of the broadcast receiving module 111 (see FIG. 1A) may be retractable into the terminal body. Alternatively, an antenna may be formed in a form of film to be attached onto an inner surface of the rear cover 103 or a case including a conductive material may serve as an antenna.

A power supply unit 190 for supplying power to the mobile terminal 100 may be disposed on the terminal body. The power supply unit 190 may include a batter 191 which is mounted in the terminal body or detachably coupled to an outside of the terminal body. The battery 191 may receive power via a power source cable connected to the interface unit 160. Also, the battery 191 may be (re)chargeable in a wireless manner using a wireless charger. The wireless charging may be implemented by magnetic induction or electromagnetic resonance.

Further, the drawing illustrates that the rear cover 103 is coupled to the rear case 102 for shielding the battery 191, so as to prevent separation of the battery 191 and protect the battery 191 from an external impact or foreign materials. When the battery 191 is detachable from the terminal body, the rear case 103 may be detachably coupled to the rear case 102.

An accessory for protecting an appearance or assisting or extending the functions of the mobile terminal 100 may further be provided on the mobile terminal 100. As one example of the accessory, a cover or pouch for covering or accommodating at least one surface of the mobile terminal 100 may be provided. The cover or pouch may cooperate with the display unit 151 to extend the function of the mobile terminal 100. Another example of the accessory may be a touch pen for assisting or extending a touch input onto a touch screen. Meanwhile, the present disclosure may display information processed in the mobile terminal using a flexible display. Hereinafter, description thereof will be given in detail with reference to the accompanying drawings.

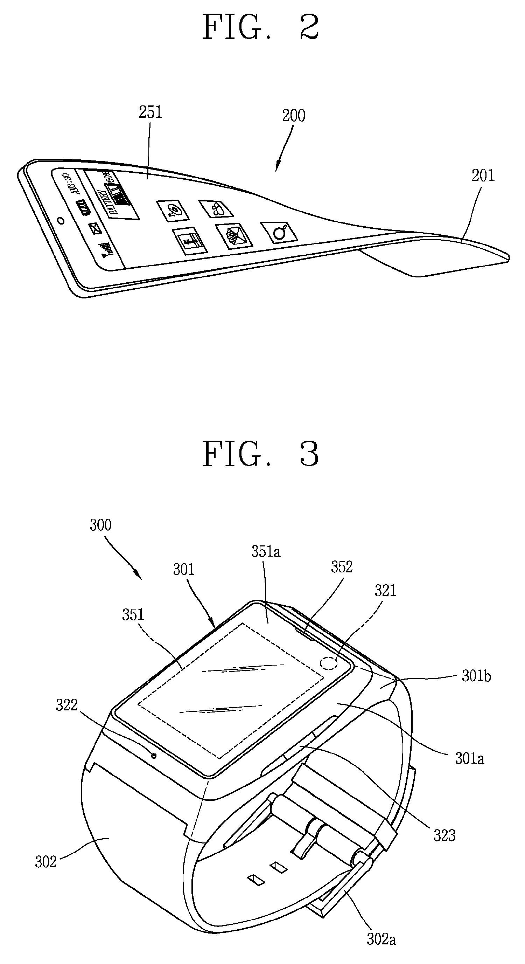

FIG. 2 is a conceptual view illustrating an exemplary variation of a mobile terminal 200 according to an embodiment of the present disclosure. As illustrated in FIG. 2, a display unit 251 may be deformable by an external force. The deformation may be at least one of curving, bending, folding, twisting and rolling of the display unit 251. The deformable display unit 251 may be referred to as a 'flexible display unit.' Here, the flexible display unit 251 may include both a general flexible display and an e-paper.

The general flexible display denotes a light, non-fragile display, which still exhibits characteristics of the conventional flat panel display and is fabricated on a flexible substrate which can be curved, bent, folded, twisted or rolled. Also, the e-paper is a display technology employing the characteristic of a general ink, and is different from the conventional flat panel display in view of using reflected light. The e-paper may change information by using a twist ball or an electrophoresis using a capsule.

When the flexible display unit 251 is not deformed (for example, in a state with an infinite radius of curvature, hereinafter, referred to as a first state), a display region of the flexible display unit 251 may become a flat surface. When the flexible display unit 251 is deformed from the first state by an external force (for example, a state with a finite radius of curvature, hereinafter, referred to as a second state), the display region may become a curved surface (or a bent surface). As illustrated, information displayed in the second state, may be visual information output on the curved surface. The visual information may be realized so a light emission of each unit pixel (subpixel) arranged in a matrix configuration is controlled independently. The unit pixel denotes an elementary unit for representing one color.

The flexible display unit 251 may be placed in a curved state (for example, a state of being curved from up to down or from right to left), other than a flat state, in the first state. In this instance, when an external force is applied to the flexible display unit 251, the flexible display unit 251 may be deformed back into the flat state or into a more curved state.

Further, the flexible display unit 251 may implement a flexible touch screen by a combination with a touch sensor. When a touch is input onto the flexible touch screen, the controller 180 (see FIG. 1A) may execute a control corresponding to the touch input. The flexible touch screen may be configured to sense a touch input even in the second state as well as in the first state.

The mobile terminal 200 according to the exemplary variation may include a deformation sensor which senses the deformation of the flexible display unit 251. The deformation sensor may be included in the sensing unit 140 (see FIG. 1A). The deformation sensor may be disposed in the flexible display unit 251 or a case 201 to sense information related to the deformation of the flexible display unit 251. Here, the information related to the deformation of the flexible display unit 251 may be a deformed direction, a deformed degree, a deformed position, a deformed time, an acceleration that the deformed flexible display unit 251 is restored, and the like. In addition to those, such information may be various information which is sensible in response to curving of the flexible display unit 251.

Also, the controller 180 can change information displayed on the flexible display unit 251 or generate a control signal for controlling a function of the mobile terminal 200, based on the information related to the deformation of the flexible display unit 251 sensed by the deformation sensor. The mobile terminal 200 according to the exemplary embodiment may include a case 201 for accommodating the flexible display unit 251. The case 201 may be deformable together with the flexible display unit 251, taking into account the characteristic of the flexible display unit 251.

A battery disposed in the mobile terminal 200 may also be deformable together with the flexible display unit 261, taking into account the characteristic of the flexible display unit 251. To implement the battery, a stack and folding method of stacking battery cells may be applied. Further, a mobile terminal may extend to a wearable device which is wearable on a human body, going beyond usually using the mobile terminal by a user with grabbing it with a hand. Examples of the wearable device may include a smart watch, a smart glass, a head mounted display (HMD), and so on. Hereinafter, description will be given of examples of a mobile terminal extending to the wearable device.

A wearable device may exchange data with (or cooperate with) another mobile terminal 100. The short-range communication module 114 may sense (recognize) a wearable device, which can communicate with the mobile terminal), near the mobile terminal 100. In addition, when the sensed wearable device is a device which is authenticated to communicate with the mobile terminal 100 according to an embodiment of the present disclosure, the controller 180 can transmit at least part of data processed in the mobile terminal 100 to the wearable device via the short-range communication module 114. Hence, a user of the wearable device may use the data processed in the mobile terminal 100 on the wearable device. For example, when a call is received in the mobile terminal 100, the user can answer the call using the wearable device. Also, when a message is received in the mobile terminal 100, the user can check the received message using the wearable device.

FIG. 3 is a perspective view illustrating one example of a watch type mobile terminal 300 in accordance with another exemplary embodiment. As illustrated in FIG. 3, the watch type mobile terminal 300 may include a main body 301 with a display unit 351, and a band 302 connected to the main body 301 to be wearable on a wrist.

The main body 301 may include a case defining an appearance. As illustrated, the case may include a first case 301 a and a second case 301b cooperatively defining an inner space for accommodating various electronic components. However, the present disclosure may not be limited to this. One case may be configured to define the inner space, thereby implementing a mobile terminal 300 with a uni-body.

The watch type mobile terminal 300 may be allowed to perform wireless communication, and an antenna for the wireless communication may be installed in the main body 301. The antenna may extend its function using a case. For example, a case including a conductive material may be electrically connected to the antenna so as to extend a ground area or a radiation area.

The display unit 351 may be disposed on a front surface of the main body 301 to output information thereon. The display unit 351 may be provided with a touch sensor so as to implement a touch screen. As illustrated, a window 351a of the display unit 351 may be mounted onto the first case 301a to form a front surface of the terminal body together with the first case 301 a. An audio output module 352, a camera 321, a microphone 322, a user input unit 323 and the like may be disposed on the main body 301. When the display unit 351 is implemented as the touch screen, it may function as the user input unit 323, which may result in excluding a separate key on the main body 301.

The band 302 may be worn on the wrist in a surrounding manner. The band 302 may be made of a flexible material for facilitating the wearing. As one example, the band 302 may be made of fur, rubber, silicon, synthetic resin or the like. The band 302 may also be configured to be detachable from the main body 301. Accordingly, the band 302 may be replaceable with various types of bands according to a user's preference.

Further, the band 302 may be used for extending the performance of the antenna. For example, the band may include therein a ground extending portion electrically connected to the antenna to extend a ground area. The band 302 may be provided with a fastener 302a. The fastener 302a may be implemented into a buckle type, a snap-fit hook structure, a Velcro type, or the like, and include a flexible section or material. The drawing illustrates an example that the fastener 302a is implemented into the buckle type.

Hereinafter, embodiments associated with a control method that can be implemented on a mobile terminal having the foregoing configuration will be described with reference to the accompanying drawings. The controller of the mobile terminal may provide an application list being implemented with multi-tasking based on a user request. The application list may include at least one application item, and any one application item may include information corresponding to any one application being performed on the mobile terminal. For example, the application item may include at least one of a name of application, an icon and screen information that has been most recently displayed by an application.

According to the related art, a user can check screen information that has been recently displayed for each of applications that have been recently performed through the application list. In recent years, a user need for a user interface allowing a user to use screen information again that has been used once such as screen information displayed 5 minutes ago or an hour ago rather than the most lately displayed screen information has been formed.

For example, when a user wants to send a picture that has sent to Obama in the morning to Putin, it causes inconvenience for the user to enter the gallery again to find the picture that has sent to Obama. In other words, there is a user need for a user interface capable of checking at least one image that has transmitted to a third person within a predetermined period of time based on a current time, or simply reaccessing any one of websites that have been accessed within a predetermined period of time based on a current time.

An object of the present disclosure is to provide a mobile terminal and a control method thereof for allowing a user to easily redisplay screen information that has been displayed previously for each application. Furthermore, another object of the present disclosure is to provide a mobile terminal and a control method thereof for allowing a user to immediately search screen information displayed on each application based on display time to use it again. In other words, an object of the present disclosure is to provide a user graphic interface allowing a user to more easily find a thing for which he or she has just done compared to a multitasking list.

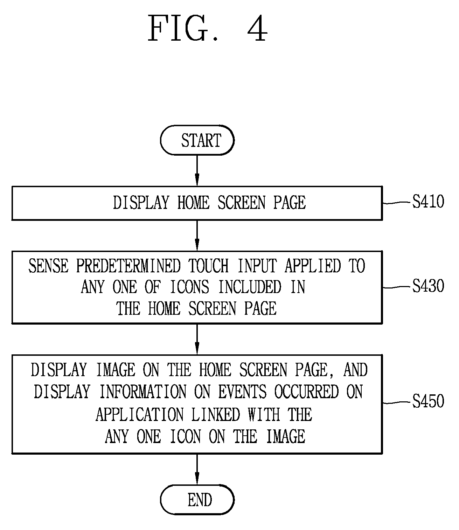

Hereinafter, a control method of a mobile terminal for solving the foregoing object will be described in detail. In particular, FIG. 4 is a flow chart illustrating a control method of a mobile terminal implemented by the present disclosure. First, the controller controls the display unit to display a home screen page (S410). A home screen page can be displayed on the display unit 151 of the mobile terminal and may include at least one object such as an icon or widget of an application installed in the mobile terminal. However, the home screen page displayed on the display unit may be merely an illustration, and a graphic user interface (GUI) of an application currently being executed may be displayed on the display unit, and the graphic user interface may include at least one object.

Next, the controller senses a predetermined touch input applied to one of icons contained in the home screen page (S430). The predetermined touch input may be classified into a short touch and a long touch. When a short touch is applied to any icon, an application linked with the icon is performed, and when a long touch is applied to the icon, a function of moving the location of the icon or deleting the icon from the home screen page is performed.

On the contrary, when a different predetermined touch input is applied to the icon, the controller displays an image on the home screen page, and displays information on an event that has occurred on an application linked with the icon on the image (S450). Here, the different predetermined touch input (PT) can be a touch input started from one position of the icon to consecutively move while drawing a circle.

In addition, the predetermined touch input can be a touch input consecutively knocking several times within a predetermined period of time. Otherwise, the predetermined touch input can be a touch input for knocking an icon at least once using a plurality of objects such as touching an icon with two fingers. However, the foregoing touch inputs are merely illustrations, and the predetermined touch input can be modified in various forms according to an embodiment.

The predetermined touch input (PT) is used to check events occurred on a specific application when a home screen page is displayed. When a short touch is applied to an icon, it is differentiated from displaying an execution screen of the application instead of a home screen page. More specifically, when the predetermined touch input (PT) is applied to any one of the plurality of icons, the controller selects an application linked with the any one icon. Furthermore, the controller searches an event occurred within a predetermined period of time on the selected application, and displays information on the searched event on the home screen page. When there is a plurality of searched events, a plurality of information corresponding to each event can be displayed.

Here, the selected application as a concept including a widget, a home launcher or the like may denote all types of programs that can be operated on a terminal. Accordingly, the application may be a program for performing a function such as web browser, video play, message transmission and reception, schedule management, application update, and the like.

The occurrence of an event may be when there is a missed call, when there is an application to be updated, when a message has arrived, charging, power-on or power-off of the terminal, when an LCD awake key is pressed (LCD awake key), alarm, incoming call, missed notification, and the like, for example. In another example, when specific information is received through the wireless communication unit of the terminal, it denotes that an event has occurred on an application associated with the specific event, and the controller senses it. Otherwise, in case where there is an item entered by the user on a schedule management, it denotes that an event has occurred on a schedule management application when the date is a date corresponding to the item.

Further, information on an event (hereinafter, referred to as "event information") may be visual information implemented in the form of an image, text, video, icon, or the like for notifying an event occurred on an application. For example, the event may be message reception, and the information may be the content of the message. In another example, the event may be the notification of a schedule set on schedule management, and the information may be the detailed information of the set schedule, or the like. For still another example, the event may be the occurrence of an application to be updated, and the information may be the detailed information of the application to be updated, or the like.

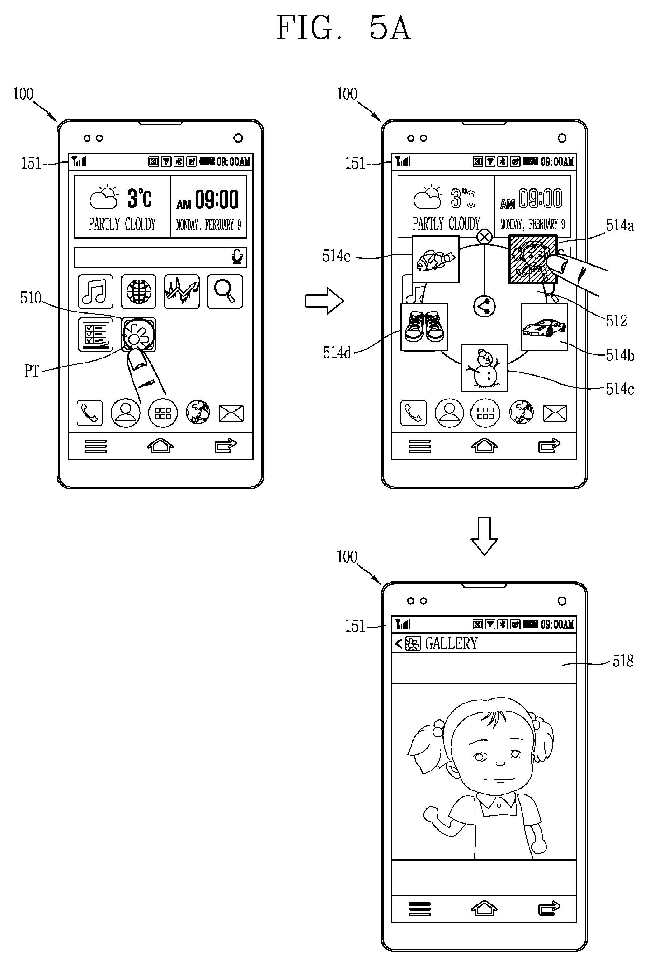

The event information may be configured in various forms according to the type of an event occurred on an application. Specific embodiments associated with information on an event will be described later with reference to the accompanying drawings of FIGS. 5A through 5E. When there are a plurality of events occurred on the selected application, a plurality of event information corresponding to each event can be displayed at time intervals from each other. For example, when a first and a second event have occurred on the selected application, the controller 180 can display first and second event information corresponding to the first and the second event in response to the preset type of touch (PT).

When a plurality of event information have occurred on the selected application, the controller 180 can display event information corresponding to a predetermined number. When a lot of event information are displayed at once, the event information may overlap with each other, thereby causing difficulty for a user to check them. Accordingly, the predetermined number is determined to the extent of displaying event information not to overlap with each other above a predetermined level, and the predetermined number further increases in a relative manner as the size of the display unit 151 increases.

Event information corresponding to a predetermined number may be displayed in a sequence in which events have occurred. Similarly to an analog phone dial, a predetermined number of event information can be displayed one by one at intervals from each other in a clockwise direction from an arbitrary reference position. However, the present disclosure is not limited to this, and a predetermined number of event information may be displayed one by one in an overlapping manner in a predetermined direction from an arbitrary reference position.

The event information can be displayed on an image displayed on the home screen page. Specifically, when the preset type of touch (PT) is applied, the controller 180 can display an image covering part of the home screen page, and display information on an event over the image. The reason of displaying the image is to prevent a malfunction from applying a user's unintentional touch to an icon contained in the home screen page. Furthermore, it is to prevent information on the event from being displayed in an overlapping manner with an icon contained in the home screen page.

An image displayed by the preset type of touch (PT) may be a different image according to the type of the selected application. In another example, it may be a different image according to the number of events occurred on the selected application. Here, a different image denotes an image having a different shape, length, color or the like, for example.

Next, the controller 180 senses a touch input applied to the image. In response to the touch input, the controller 180 can control information on an event displayed within the image. In this instance, different control may be performed according to the type of the touch input. For an example, when a drag input consecutively moving from one position of the image to another position thereof is applied, the displayed event information may be changed. Here, the displayed event information may event information corresponding to sequentially occurred events, respectively. For example, when a drag input is applied when first through fifth event information are displayed, fourth through eighth event information can be displayed. The amount of the changed information may vary according to at least one of the intensity, speed and distance of a drag input. Furthermore, event previously occurred information or lately occurred event information can be displayed according to a drag direction.

Further, when the event information is displayed, an X-indicator can be generated. When a touch is applied to the X-indicator, the image and the event information disappear from the display unit 151. In other words, the controller 180 ends the display of the image and the event information in response to a touch applied to the X-indicator. As a result, the user can simply return to a home screen page.

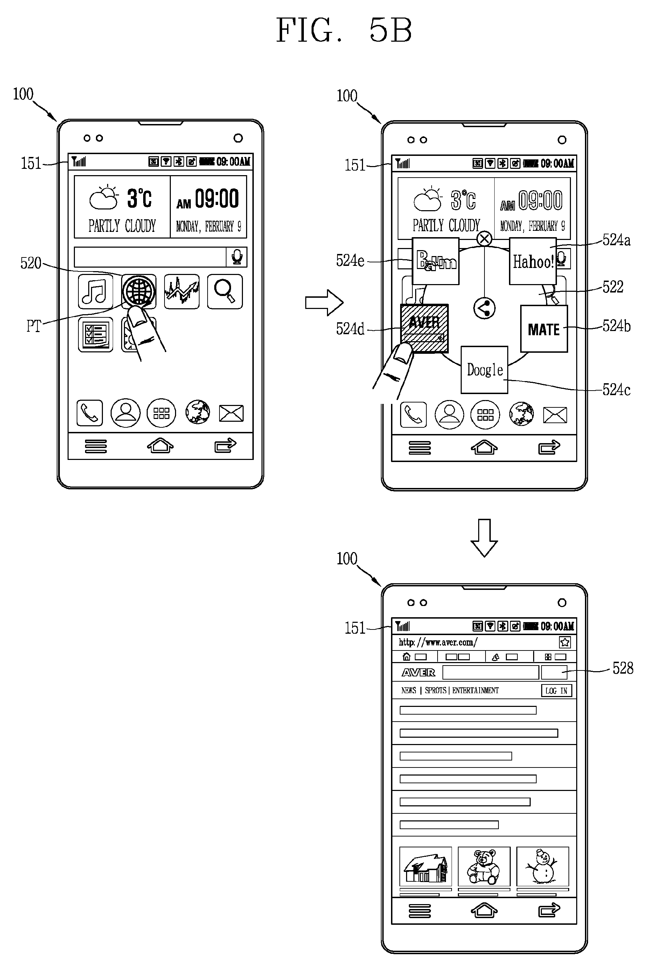

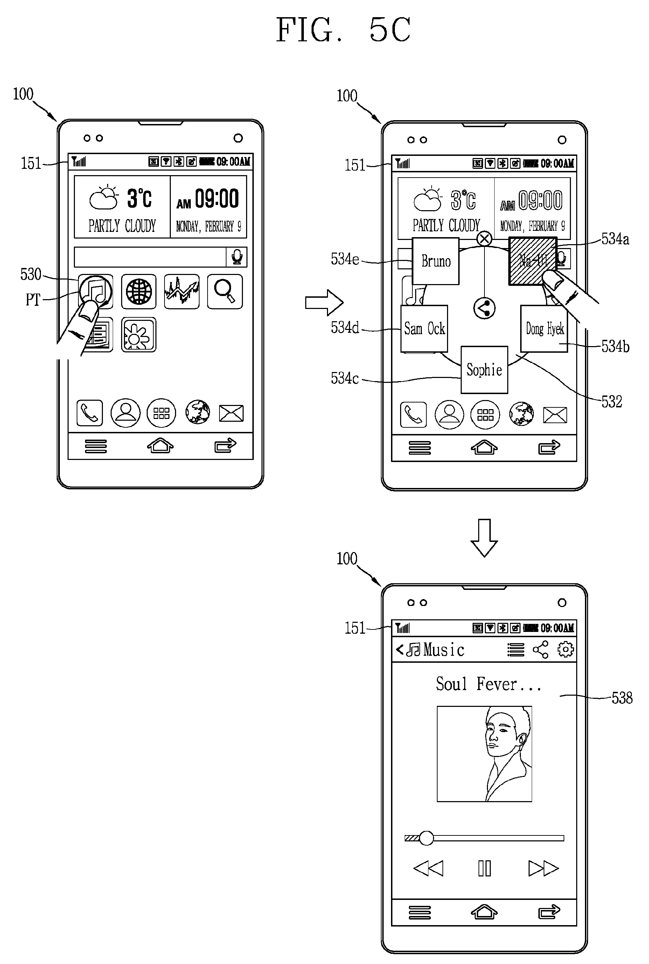

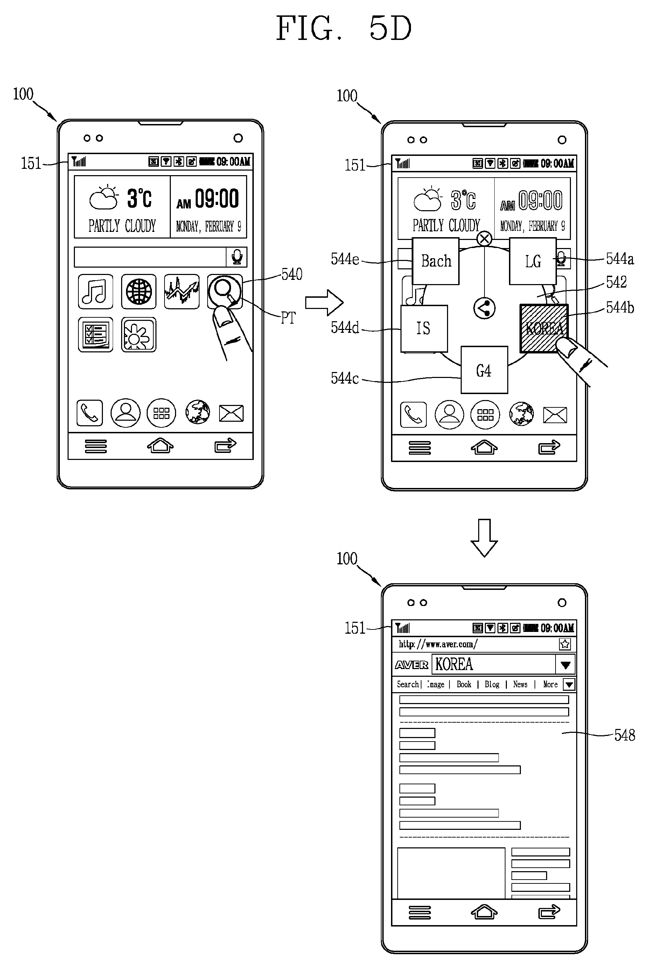

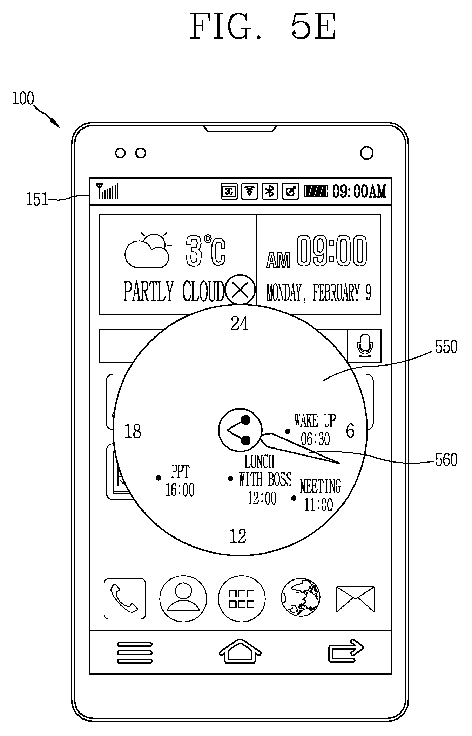

The foregoing control method associated with the present disclosure may be implemented in various forms as illustrated in FIGS. 5 through 12. Even in different embodiments , the same or similar reference numerals are designated to the same or similar configurations to the earlier examples, and the description thereof will be substituted by the earlier description.

FIGS. 5A through 5E are exemplary views illustrating the operation of a mobile terminal according to the control method of FIG. 4. Referring to FIG. 5A, the gallery icon 510 may be included in a home screen page. The gallery icon 510 corresponds to a gallery application in which images and/or videos stored in the memory are displayed in a list format. When a short touch is applied to the gallery icon 510, the gallery application is performed to display the execution screen thereof.

When the preset type of touch (PT) is applied to the gallery icon 510, an image 512 covering a partial region of the home screen page is displayed when the home screen page is displayed. Then, event information corresponding to information associated with the event are displayed on the image 512 in a sequence in which events have occurred on an application. For example, the present drawing illustrates an example in which a first through a fifth gallery event 514a-514e are arranged in a clockwise direction based on the 12 o'clock position of the image 512.

An event on the gallery application may denote capturing by the camera, receiving an image from a server or external terminal within a predetermined period of time, or the like, and event information may be a thumbnail image of an image/video generated by the capture or reception. The predetermined period of time may denote a period of time within a reference period of time based on a current time or a specific period of time set by a user input. For example, the specific period of time may be set to "yesterday", "January 1, 2015", or the like.

Since event information are sequentially displayed according to a sequence in which events have occurred, the user can recognize event information that has occurred within a predetermined period of time in a time sequence. According to the present illustration, it is possible to solve a problem in which an application should be performed when a user wants to check a previous notification since a new notification covers a previous notification in a terminal in the related art.

Further, an edge of each event information may have a different color according to the type (or category) of the occurred event. The edges of first gallery event information 514a, second gallery event information 514b, third gallery event information 514c, fourth gallery event information 514d and fifth gallery event information 514e may have an image received through a message, an image captured through a camera, a recently deleted image, a video and a color corresponding to the category of an image captured in a panorama mode, respectively. Thus, event information are organized for each category, thereby allowing the user to check event occurred on the gallery application in an orderly manner.

Further, when a touch is applied to one of a plurality of event information being displayed, the controller 180 can execute the relevant application, and control the display unit 151 to display an execution screen thereof. Here, the execution screen may include screen information corresponding to the any one event information. For example, when a touch is applied to the most recently occurred first event information 514a, the controller executes a gallery application to display the execution screen 518 on the display unit 151, and controls the display unit 151 to display an image corresponding to the first event information 514a.

In another example, referring to FIG. 5B, the home screen may include a browser icon 520. The browser icon 520 corresponds to a browser application associated with the execution of a browser. When the preset type of touch (PT) is applied to the browser icon 520, an image 522 covering a partial region of the home screen page is displayed when the home screen page is displayed. Furthermore, event information are displayed on the image 522 in a sequence in which events have occurred on an application. For example, FIG. 5B illustrates an example in which first through fifth browser event information 524a-524e are arranged in a clockwise direction based on the 12 o'clock position of the image 522.

An event on the browser application may be an event that has been displayed on the display unit 151 within a predetermined period of time or is shared by a third person, and event information may include at least one of a thumbnail image indicating at least part of a webpage that has been displayed or shared, a link of the webpage, a domain providing the webpage, and a brand of provider who provides the webpage.

Further, when a touch is applied to any one event information 524d of the displayed browser event information 524a-524e, the controller executes a browser application, and controls the display unit 151 to display the execution screen 528. The execution screen 528 may be a webpage associated with the any one event information 524d.

In another example, referring to FIG. 5C, the home screen may include a play icon 530. The play icon 530 corresponds to a play application associated with multimedia play. When the preset type of touch (PT) is applied to the play icon 530, an image 534 covering a partial region of the home screen page is displayed when the home screen page is displayed. Furthermore, event information are displayed on the image 534 in a sequence in which events have occurred on an application. For example, FIG. 5C illustrates an example in which first through fifth play event information 534a-534e are arranged in a clockwise direction based on the 12 o'clock position of the image 534.

An event on the play application may be an event in which a multimedia is played within a predetermined period of time, and event information may include at least one of a thumbnail image indicating a multimedia that has been played, a title of multimedia, and a name of copyright owner. Further, when a touch is applied to any one event information 534a of the displayed play event information 534a-534e, the controller executes a play application, and controls the display unit 151 to display the execution screen 538. The execution screen 538 may include a screen for playing a multimedia corresponding to the any one event information 534a.

In still another example, referring to FIG. 5D, the home screen may include a search icon 540 of a search application. When the preset type of touch (PT) is applied to the search icon 540, an image 544 covering a partial region of the home screen page is displayed when the home screen page is displayed. Furthermore, event information are displayed on the image 544 in a sequence in which events have occurred on an application. For example, FIG. 5D illustrates an example in which first through fifth search event information 544a-544e are arranged in a clockwise direction based on the 12 o'clock position of the image 534.

An event on the search application may be an event in which a keyword is received from a user within a predetermined period of time to perform a search operation, and event information may denote a keyword that has been searched. Further, when a touch is applied to any one event information 544b of the displayed search event information 544a-544e, the controller 180 executes a search application, and controls the display unit 151 to display the execution screen 548. The execution screen 548 may include a screen on which a search operation has been performed using a keyword corresponding to the any one event information 544b.

For yet still another example, referring to FIG. 5E, when a preset type of touch (PT) is applied to a schedule icon of a schedule management application, event information occurred on the schedule management application may be displayed. An event on the schedule management application may denote an alarm output due to a predetermined schedule and/or a schedule in which an alarm output is planned, and schedule event information may include at least one of a title of a schedule, a place, a time and attendees in which the schedule is planned.

When schedule event information occurred on a schedule management application is displayed, the controller 180 can display a circular shaped image 550 and set an edge of the image to a time line. The time line denotes a graphic object indicating a predetermined time zone. The time line may be set to correspond to 24 or 12 hours. For an example, when the time line is set to correspond to 24 hours, the 12 o'clock position of the image 550 denotes 24 o'clock and the 6 o'clock position thereof denotes 12 o'clock, and the 3 o'clock position thereof denotes 6 o'clock. In other words, an edge of the image 550 may be set to a time line having a different time.

The controller 180 can display the event information of an event that has been occurred or is planned within a predetermined period of time at one position of the image according to a time set to the time line. For example, when an alarm for wake-up is displayed at 6:30, event information associated with the alarm may be displayed at a position corresponding to 6:30 on the image 550.

Moreover, the controller 180 can display an indicator 560 indicating a current time on the image 550. In addition, the controller 180 displays event information occurred on a specific application in response to the preset type of touch (PT), and displays the event information while maintaining the preset type of touch (PT) without being released. Then, when the preset type of touch (PT) is released, the display of the event information is ended. In other words, when the preset type of touch (PT) is released, the event information disappears from the display unit 151. According to the foregoing operation mode, a user interface, which is convenient for a user to take out the content of information and check only the content thereof to put it back again, is implemented.

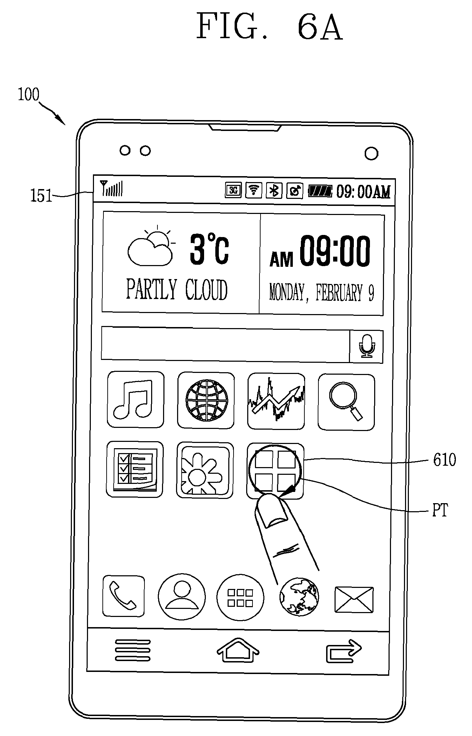

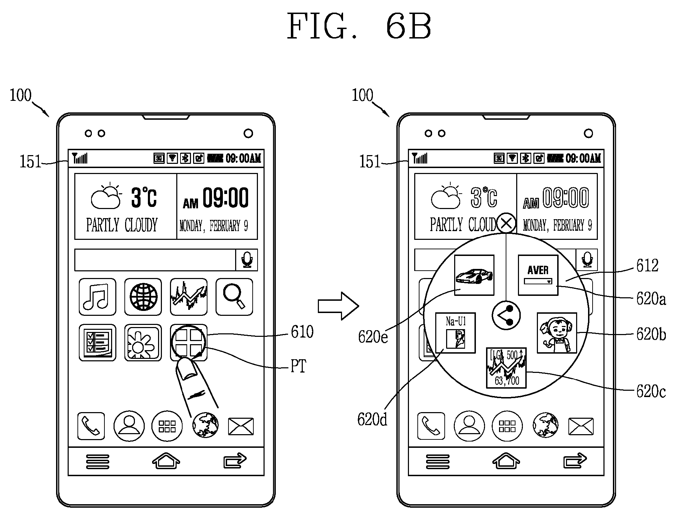

Next, FIGS. 6A and 6B are views illustrating the operation of a mobile terminal when a predetermined touch input is applied to a folder icon. Referring to FIG. 6A, the home screen page may include a folder icon 610. The folder icon denotes an icon including a plurality of icons corresponding to different applications. A user can generate a folder icon to manage a plurality of applications as one group, and the folder icon may include the icons of applications contained in one group. When a short touch is applied to the folder icon, the mobile terminal controls the display unit 151 to display an icon contained in the folder icon.

Further, the preset type of touch (PT) may be applied to the folder icon 610 while displaying the folder icon 610. In this instance, the mobile terminal searches events occurred on a plurality of applications set to one group by the folder icon 610 for a predetermined period of time, and displays event information corresponding to the searched events.

For example, a first and a second application may be set to one group, and a first and a second icon corresponding to the first and the second application may be included in a first folder icon. The mobile terminal searches events occurred on the first and the second application for a predetermined period of time in response to the preset type of touch (PT) applied to the first folder icon. Furthermore, event information on the searched events are displayed on an image covering part of the home screen page. When events A and B occur on the first application, and events C and D occur on the second application for the predetermined period of time, the mobile terminal may display events A through D on the image. Here, the events A through D may be arranged in a clockwise direction based on one position of the image, and an edge of the event information may have different colors according to the types of applications on which events have occurred.

As illustrated in FIG. 6B, when the preset type of touch (PT) is applied to the folder icon 610, an image 612 covering part of the home screen page is displayed on the display unit 151 when the display of the home screen page is maintained. Furthermore, event information on events occurred on a plurality of applications, respectively, associated with the folder icon 610 are displayed on the image 612.

As a result, a user can check events occurred on one application in a time sequence as well as check events occurred on a predetermined number of applications set by the user in a time sequence when the home screen page is displayed. In addition, the preset type of touch (PT) may be applied to a vacant space in which any graphic object is not displayed within the entire region of the home screen page. The graphic object may denote a graphic element, such as a text, an image, a video or the like, formed to execute a predetermined function, and the controller should execute a function corresponding to the graphic object when a short touch is applied to the graphic object. Accordingly, the vacant space denotes a region in which any function is not performed even when a short touch is applied thereto.

When the preset type of touch (PT) is applied to the vacant space, the controller searches events occurred on all applications installed in the mobile terminal for a predetermined period of time, and display event information corresponding to the searched events on an image covering part of the home screen page. When a number of the searched events is greater than a reference number, only event information corresponding to a predetermined number of events may be displayed in the latest order.

In other words, a mobile terminal according to an embodiment of the present disclosure may select one or more applications based on where a predetermined touch input is applied, and display event information on events occurred on the selected applications in a sequence in which events have occurred. As a result, the user can visually check functions that have been previously executed on a specific application, and selectively execute the previously executed functions again.

Further, there is a problem in which all events occurred on the selected application cannot be displayed as event information due to the size limit of the display unit. In order to solve this, the controller selects only a predetermined number of events to display the event information of the selected events.

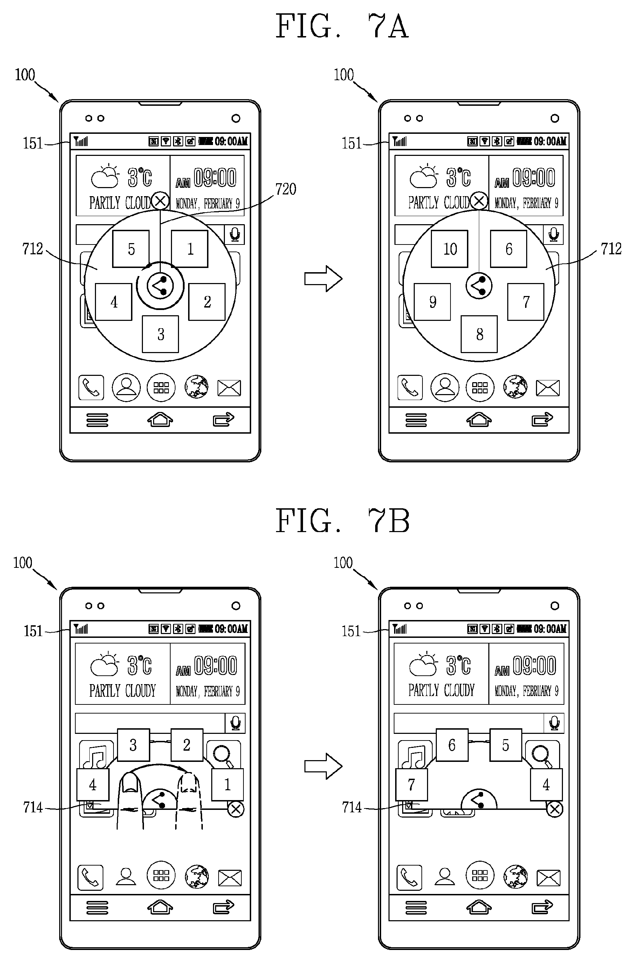

Next, FIGS. 7A and 7B are views illustrating a method of controlling information associated with an event. Referring to FIG. 7A, event information occurred on a specific application by a preset type of touch (PT) are displayed on an image 712 covering part of the home screen page. Five rectangles are illustrated on the image 712, wherein each rectangle denotes different event information, and a number inside the rectangle denotes an identification number for identifying the event information. As the number inside the rectangle decreases, it denotes that the relevant event is a recently occurred event.

Further, when a number of event occurred on a specific application is greater than a predetermined number, the controller 180 can display only event information associated with some events on the image 712, and not display event information associated with the remaining events. In this instance, the user can control the mobile terminal to display event information associated with the remaining events instead of event information being displayed using scrolling. More specifically, the scrolling may be performed by a flicking input started from one position inside the image 712 to move in a clockwise direction or counter-clockwise direction without being released. A plurality of event information are arranged in a clockwise direction based on one position of the image 712 with a circular shape, and thus scrolling is performed by a flicking input moving in a clockwise direction or counter-clockwise direction.

Here, the controller 180 can control scrolling based on the moving direction and moving distance of a flicking input. For example, as illustrated in FIG. 7A, when a flicking input rotating one revolution in a counter-clockwise direction while displaying event information No. 1 through No. 5, the controller 180 can display event information No. 6 through No. 10 instead of the event information No. 1 through No. 5.

Here, a reference line 720 may be displayed on the image 712. The event information may gradually move according to a flicking input, thereby allowing new event information to appear or the event information being displayed to disappear based on the reference line. More specifically, referring to FIG. 7A, event information No. 1 may move in a counter-clockwise direction according to a flicking input moving in a counter-clockwise direction to gradually disappear while passing through the reference line 720. At the same time, event information No. 6 may gradually appear in a counter-clockwise direction based on the reference line 720.

In another example, as illustrated in FIG. 7B, an image 714 may be formed in a semi-circular shape. Even in this instance, scrolling on event information may be performed by a flicking input moving in a clockwise direction or counter-clockwise direction. In the related art, there is a disadvantage in which it is complicated to see due to several types of mixed notifications and it takes a long time to search required information or notified information covering the entire screen does not allow a user to see what he or she has done, but the foregoing illustration solves the disadvantage.

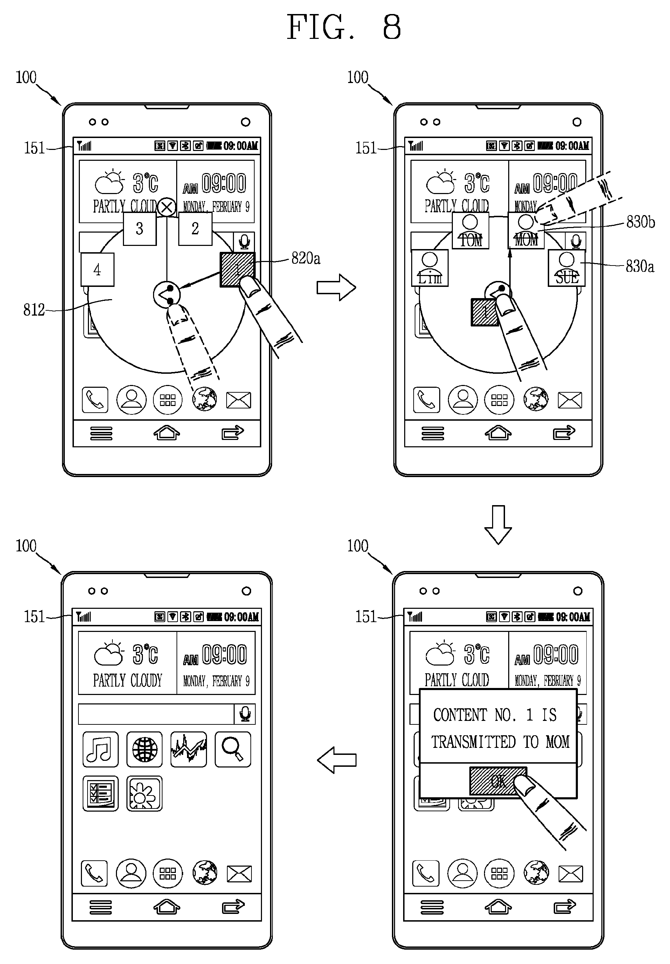

Next, FIGS. 8 through 10B are views illustrating a method of executing a function linked with information associated with an event. Referring to FIG. 8, a first touch input for dragging event information 820a around an image 812 can be performed. In this instance, the controller 180 can provide a graphic interface for transmitting the event information 820a to an external terminal. More specifically, the controller 180 can display at least one external terminal information capable of receiving the event information 820a in response to the first touch input.

When a second touch input started from the first touch input is applied, the controller 180 can transmit the event information 820a to any one external terminal based on the second touch input. The second touch input denotes a touch input consecutively moving into a region in which any one external terminal is displayed. For example, when a second touch input moving into external terminal information corresponding to "MOM" 830b is applied, the controller 180 can transmit the event information 820a to an external terminal corresponding to "MOM" or transmit the event information 820a to a predetermined server to transmit it to the external terminal stored with "MOM." As a result, the user easily share information associated with previously occurred events with a third person. A similar concept applies to transmitting the event information 820a to an external terminal corresponding to "SUE" 830a.

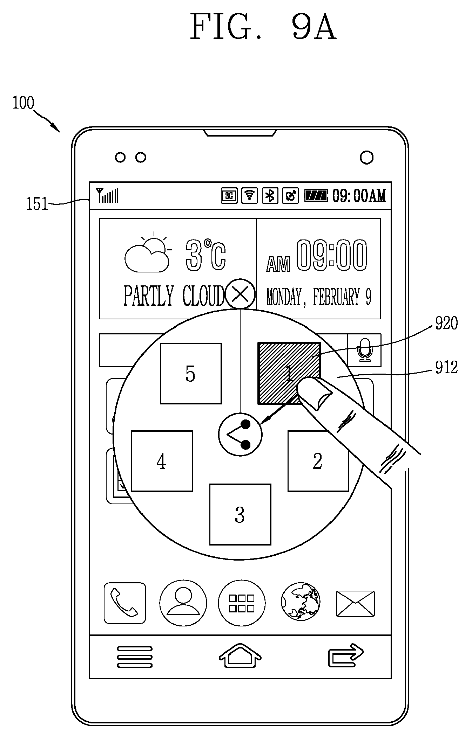

A graphic interface for transmitting event information to an external terminal will be described in more detail with reference to FIGS. 9A through 10B. Referring to FIG. 9A, a first touch input for dragging any one event information 920 to the center of a first image 912 by a preset type of touch (PT) may be received. The controller 180 selects any one event information 920 based on the first touch input. Here, the any one event information 920 may be displayed at the center of the first image 912. The controller 180 can display external terminal information capable of receiving the any one event information 920 and/or application information capable of transmitting the any one event information 920 in response to the first touch input.

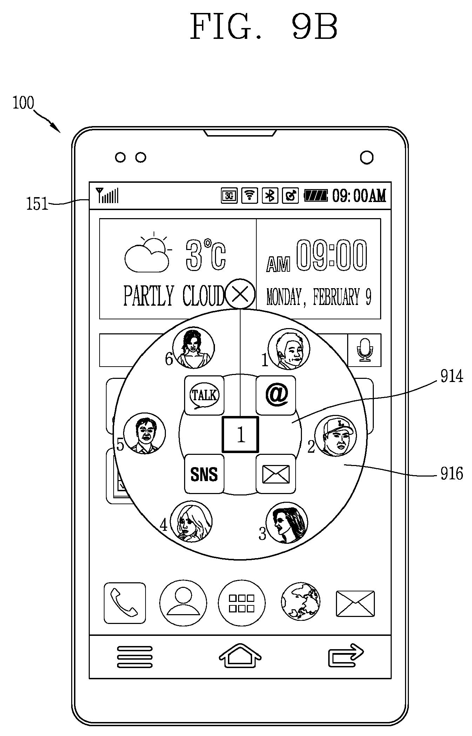

For an example, as illustrated in FIG. 9B, the controller 180 can switch the first image 912 to a second and a third image 914, 916 in response to the first touch input. Application information capable of transmitting the any one event information 920 is displayed on the second image 914, and external terminal information capable of receiving the any one event information 920 is displayed on the third image 916.

In another example, the controller 180 divides the first image 912 displayed by the preset type of touch (PT) into a first and a second region in response to the first touch input, and displays graphic objects satisfying a first condition in the first region, and displays graphic objects satisfying a second condition in the second region. Here, graphic objects satisfying the first condition may correspond to external terminal information, and graphic objects satisfying the second condition may correspond to application information.

The application information may denote an icon of application capable of performing a function of transmitting a message such as a mail, a messenger, a text, SNS or the like to a specific external terminal. The external terminal information may include a name, a photo, a phone number or the like, stored as a contact.

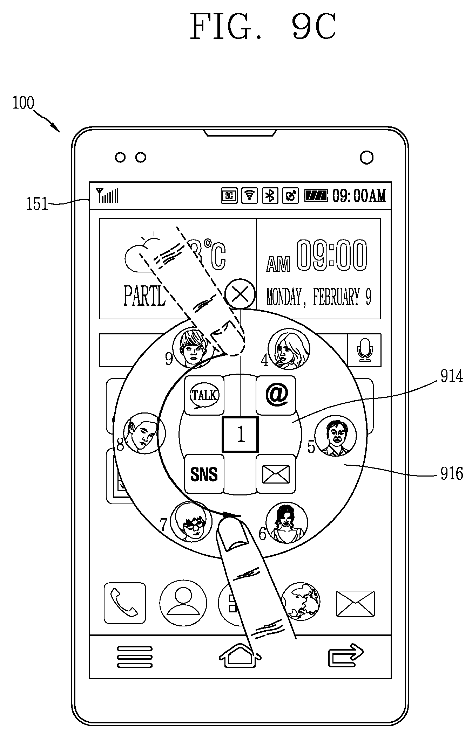

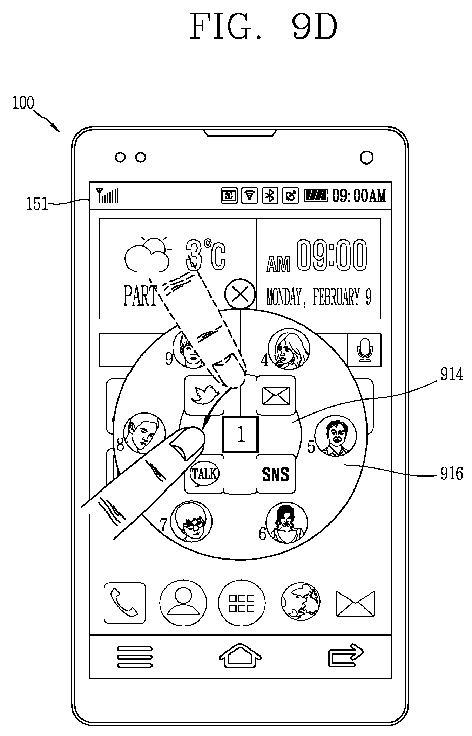

Further, the controller 180 can change information being displayed to other information based on a touch input applied to the second image 914 or third image 916. For example, as illustrated in FIG. 9C, when a flicking input moving from one position of the third image 916 to another position thereof is sensed, the controller 180 can switch external terminal information being displayed to other external terminal information. Furthermore, as illustrated in FIG. 9D, when a flicking input moving from one position of the second image 914 to another position thereof is sensed, the controller 180 can switch application information being displayed to another application information.

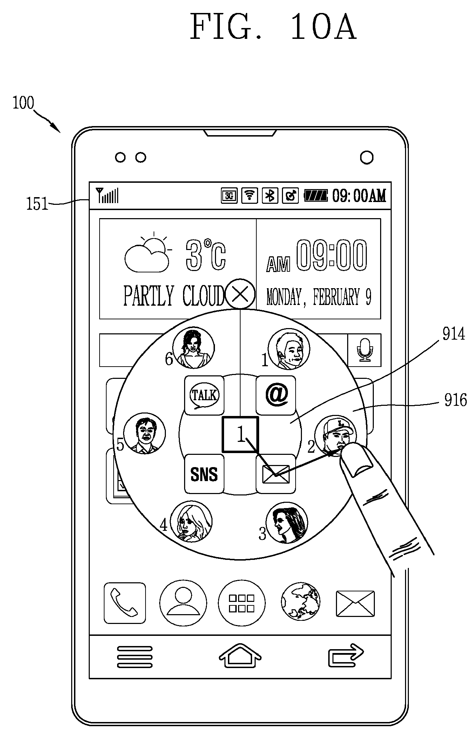

A second touch input may be applied while displaying external terminal information and application information. The controller 180 can select any one external terminal information and any one application information based on the second touch input. For example, as illustrated in FIG. 10A, the second touch may denote a touch input started from the any one event information to consecutively move to other displayed information.

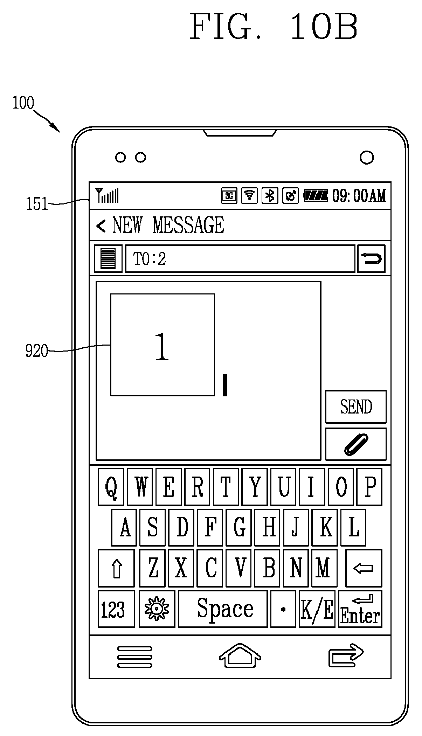

The controller 180 can transmit the any one event information to the selected external terminal using the selected application, or as illustrated in FIG. 10B, display an execution screen of the selected application to transmit the any one event information 920 to the selected external terminal. Further, the external terminal information and/or application information may be displayed while maintaining the first touch input without being released. In this instance, when the first touch input is released, the mobile terminal returns to the state illustrated in FIG. 9A.

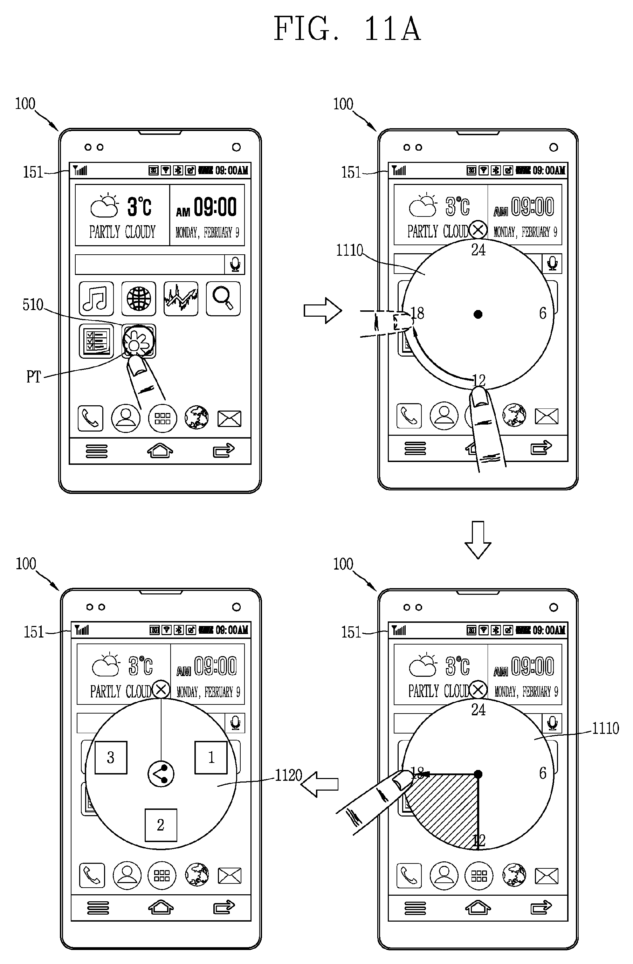

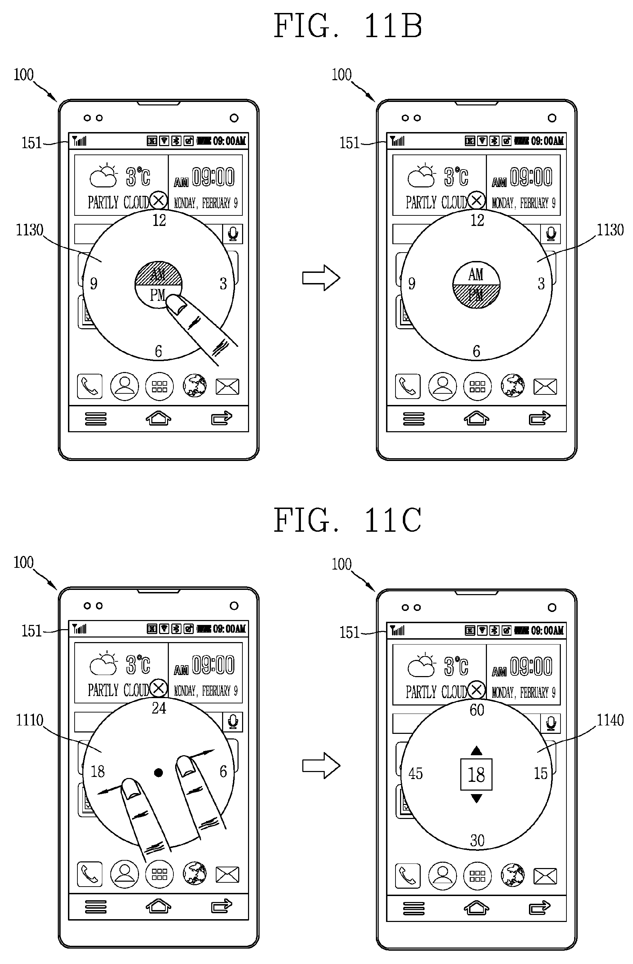

Next, FIGS. 11A through 12 are views illustrating a method of setting a period of time to be searched. Referring to FIG. 11A, the controller 180 senses a preset type of touch (PT) applied to any one icon 510 of a plurality of icons contained in a home screen page while displaying the home screen page. The controller selects an application corresponding to the any one icon 510 based on the preset type of touch (PT). This is referred to as a "selected application."

Further, the controller 180 can control the display unit 151 to display an interface capable of setting a predetermined period of time in response to the preset type of touch (PT). More specifically, the controller 180 displays an image 1110 covering part of the home screen page in response to the preset type of touch (PT).

An edge of the image 1110 may include a plurality of indices made of a number indicating a time, or the like. For example, as illustrated in FIG. 11A, when a time line for the image 1110 is set to 24 hours, a numeral or symbol indicating 24 o'clock may be displayed at a position most adjacent to an upper end of the body on an edge of the image 1110. In another example, as illustrated in FIG. 11B, when a time line for an image 1130 is set to 12 hours, a numeral or symbol indicating 12 o'clock can be displayed at the 12 o'clock position of the image 1130. When the time line is set to 12 hours, the screen may further include icons formed to select morning or afternoon.

In addition, one or more indices may be displayed at a location inside the image 1110 or adjacent to the image 1110. When a touch input moving from a first position to a second position of the image 1110, the controller 180 can set a predetermined period of time based on the touch input. More specifically, the controller 180 can set a start position or end position of the predetermined period of time based on the first position, and set an end position or start position of the predetermined period of time based on the second position. For example, as illustrated in FIG. 11A, when a touch applied to one position corresponding to 12 o'clock is moved to one position corresponding to 18 o'clock and released, the controller 180 can set a predetermined period of time to "12 through 18 o'clock."

When the touch input is released, the controller 180 can search an event occurred on the selected application for a predetermined period of time, and display the event information of the searched event on the image. Further, when at least one index indicating a time is displayed on an image, the controller 180 can change a time line set to the image based on a touch input applied to the image. For example, when a pinch-out is sensed when the time line is set to 24 hours, the controller 180 can set the time line to 12 hours. On the contrary, when a pinch-in is sensed, the controller 180 can set the time line to 48 hours. A period of time set to the time line may be modified in various ways based on pinch-in or pinch-out.

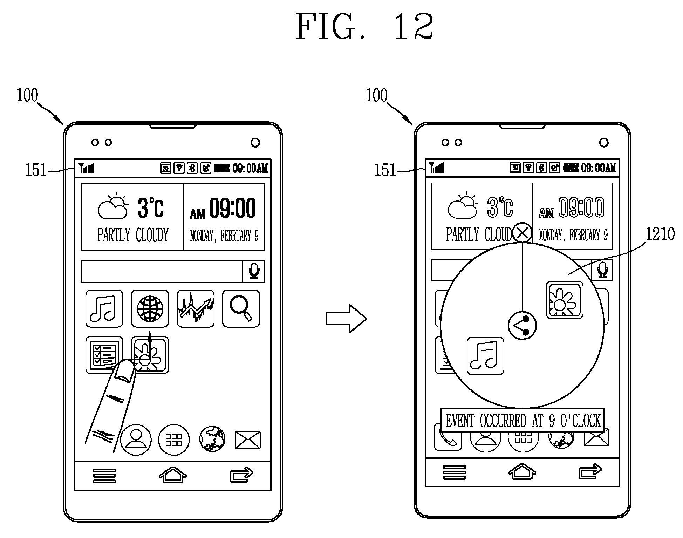

Further, when a predetermined touch input is applied to an icon of application, the controller 180 can set a predetermined period of time based on the predetermined touch input, and display the event information of events occurred for a predetermined period of time. More specifically, the controller determines which one of predetermined touch inputs matches a touch input applied to an icon of application. According to the result of the determination, the controller 180 can set a period of time corresponding to any one to a predetermined period of time, and search events occurred for the predetermined period of time, and display the event information of the searched events. For example, as illustrated in FIG. 12, when a touch input indicating 9 o'clock is applied, event information occurred between "9 o'clock and 10 o'clock" may be displayed.

Further, the mobile terminal can display a list of recently executed application in response to a user request, and the user can execute his desired function in a faster and more convenient manner using the list. The user can select any one application from the recently executed applications, thereby subsequently using a function that has been performed.

However, a plurality of user inputs should be applied to use a digital content output by any one application on a different application. For example, when a user wants to transmit an image displayed on application "A" to a third person using application "B," the user should apply a store command to store an image displayed on application "A" in the memory, apply an execute command to execute application "B", search an image to be transmitted among images stored in the memory and apply a select command thereto, and apply a send command for the selected image to the terminal. In other words, a recently executed application may be simply executed again, but a user should pass through a complicated process to use a recently output digital content on another application.

The present disclosure satisfies the foregoing requirement, and provides a mobile terminal and a control method thereof for allowing a recently output digital content to be simply used on various applications. Furthermore, the present disclosure provides a mobile terminal and a control method thereof capable of simply transmitting a recently output digital content to any one of applications associated with various social networking services.

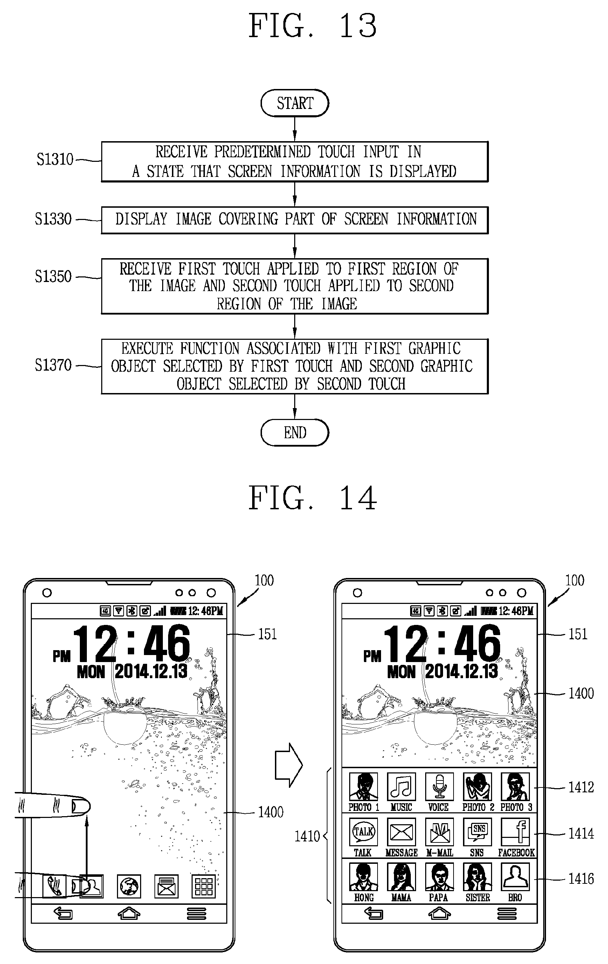

Next, FIG. 13 is a flow chart illustrating a control method of a mobile terminal according to an embodiment of the present disclosure. First, a predetermined touch input is received when screen information is displayed on the touch screen 151 (S1310). The touch screen 151 may display visual information implemented in the form of a graphic user interface (GUI), an image, a text, an icon or the like in an active state, but may be switched to an inactive state when a predetermined period of time has passed or by the input of a specific control command.

Hereinafter, when a predetermined touch input is received when screen information is displayed will be described as an example, but the present disclosure is not limited to this. In another example, when a predetermined touch input is received when the touch screen is in an inactive state, the inactive state of the touch screen is switched to an active state, and a function corresponding to the predetermined touch input is performed to display the resultant screen information on the touch screen in an active state.

Further, as visual information, screen information denotes all types of visual information that can be displayed on the touch screen 151 as one or more executable functions are performed on the terminal. The screen information may be a home screen, a lock screen, an execution screen of application being executed, a graphic user interface (GUI) according to the execution of a specific function, and the like.

The controller 180 can sense a predetermined touch input being received using the touch screen. Here, the predetermined touch input may be a touch started from an end of the touch screen 151 to consecutively move a distance longer than a reference distance in a direction of the other end thereof. More specifically, when a touch started from a lower end of the display unit 151 consecutively moves in a direction of an upper end thereof, and a moving distance of the touch is greater than a reference distance, the controller 180 determines that the predetermined touch input has been received. When the moving distance of the touch is less than the reference distance, the relevant touch is ignored since a predetermined touch input has not been received.

The predetermined touch input corresponds to a trigger gesture set to execute a tray function which will be described below. In other words, when the predetermined touch input is received on the display unit 151 when screen information is displayed, the controller 180 executes the tray function.

Hereinafter, when the predetermined touch input is started from an end of the touch screen 151 to consecutively move in a direction of the other end thereof will be described as an example, but the present disclosure is not limited to this. For example, a tray icon or tray menu formed to execute a tray function may be displayed on the touch screen 151 by a user input to execute a tray function by a touch applied to the tray icon or the tray menu. In another example, screen information may include a graphic object formed to execute a control function linked therewith in response to a touch. Here, the predetermined touch input may be modified to a multi-touch for consecutively knocking a vacant space in which any graphic object is not displayed in the entire region of screen information within a reference period of time or a long touch for touching the vacant space for a reference period of time.

Next, the process of displaying an image covering part of screen information in response to the predetermined touch input is performed (S1330). When a predetermined touch input is a touch consecutively moving from an end of the touch screen 151 in a direction of the other end thereof, the image may be a bar-shaped image formed lengthways along a lateral surface from said one end thereof in a direction of the other end thereof. An image the size of which gradually varies along the path of a predetermined touch input, and a plurality of graphic objects are displayed within the image.

The image may be a different image according to the type of screen information displayed on the touch screen 151 when the predetermined touch input is applied thereto. In another example, it may be a different image according to the type of application linked with screen information or a different image according to the user's setting. Here, the different image denotes an image having a different shape, length, color or the like.

The entire region of the image is divided into a plurality of regions, and a plurality of graphic objects corresponding to different predetermined conditions are displayed in each region. For example, when the entire region of the image is divided into a first and a second region, the controller 180 can display graphic objects corresponding to a first condition in the first region, and display graphic objects corresponding to a second condition different from the first condition in the second region.

A function of displaying an image covering part of screen information on the display unit 151 by a predetermined touch input and displaying different types of graphic objects in different regions of the image is referred to as a "tray function." Tray is defined as a space or region displaying the same type of graphic objects, and regions included in the image may be referred to as a first tray, a second tray, a third tray and the like, respectively. In other words, when a tray function is performed, predetermined trays are displayed in one region of the touch screen 151, and the trays may include graphic objects corresponding to predetermined conditions, respectively.

Specifically, graphic objects satisfying a first condition are displayed on the first tray. Here, the first condition is associated with a digital content that can be output in at least one of visual, auditory and tactile modes, and any one graphic object satisfying a first condition is formed of an image representatively indicating any one of digital content satisfying the first condition. Digital content may include a text, an image, a video, a recorded voice file, a hypertext document displayed on a browser, a uniform resource locator (URL), or the like, and may include at least one of a thumbnail image associated with a digital content, a title of the digital content, and a name or icon of application associated with the digital content. The number of graphic objects that can be displayed on a first tray is restricted, and thus graphic objects corresponding to part of digital content are displayed on the first tray. In other words, a predetermined number of graphic objects corresponding to different digital content are displayed on the first tray.

When a predetermined touch input is received, the controller 180 can select (or extract) a predetermined number of digital content that have been output or recently received from the outside. For the selection, the controller 180 arranges digital content that have been output on the terminal or received from the outside in a time sequence to display graphic objects corresponding to the digital content in a first tray in the arranged sequence. Here, the time sequence denotes arranging digital content in the latest order based on at least one of a most lately output time on the terminal, a time received from the outside and a time added to the first tray by a user input.

Alternatively, information associated with a predetermined number of latest digital content may be stored in the memory to update the information stored in the memory whenever the digital content is output on the terminal or displayed from the outside. Then, when a predetermined touch input is applied, a predetermined number of graphic objects to be displayed on the first tray may be selected based on the information stored in the memory.

Here, the output of digital content refers to outputting information (or signal) in at least one of visual, auditory and tactile modes. Further, graphic objects corresponding to a second condition are displayed on the second tray. Here, the second condition is associated with an application installed on the terminal or stored therein, and any graphic object satisfying the second condition is configured with an image (or icon) indicating any one of applications satisfying the second condition.

The application as a concept including a widget, a home launcher or the like may denote all types of programs that can be operated on a terminal. Accordingly, the application may be a program for performing a function such as web browser, video play, message transmission and reception, schedule management, application update, and the like.

The number of graphic objects that can be displayed on the second tray may be restricted, and thus graphic objects corresponding to part of the applications are displayed on the second tray. The controller 180 can select a predetermined number of applications on which events have occurred lately, and display graphic objects corresponding to the selected applications, respectively, on the second tray. Thus, the controller 180 can store information associated with a predetermined number of recent applications in the memory, and update the information stored in the memory whenever a specific application is performed or an event has occurred on a specific application. The controller 180 can select applications (or graphic object corresponding thereto) to be displayed on the second tray based on the information stored in the memory.

The execution of an application may be an operation of executing an application by a user input to display an execution screen thereof on the touch screen. The occurrence of an event may be when there is a missed call, when there is an application to be updated, when a message has arrived, charging, power-on or power-off of the terminal, when an LCD awake key is pressed (LCD awake key), alarm, incoming call, missed notification, and the like, for example.

In another example, when specific information is received through the wireless communication unit of the terminal, it denotes that an event has occurred on an application associated with the specific event, and the controller senses it. Otherwise, when there is an item entered by the user on a schedule management, it denotes that an event has occurred on a schedule management application when the date is a date corresponding to the item.

Further, the second condition may be set in more detail. For example, applications satisfying the second condition may be restricted to applications configured to transmit a digital content to a server or the other terminal. In other words, the graphic objects of predetermined applications such as a mail application, a messenger application or the like other than all the applications may be displayed on the second tray in a restricted manner.

In addition, graphic objects corresponding to a third condition are displayed on the third tray. Here, the third condition is associated with a contact, and any graphic object satisfying the third condition may include at least one of an image, an ID, a name, an email, and a phone number indicating any one of contacts satisfying the third condition.

The number of graphic objects that can be displayed on the third tray is restricted, and thus graphic objects corresponding to part of contacts are displayed on the third tray. When a predetermined touch input is received, the controller 180 selects a predetermined number contacts that have been most recently transmitted or received, contacts registered with Favorites, and displays graphic objects corresponding to the selected contacts. Otherwise, the controller 180 can select (or extract) a predetermined number of contacts with the highest communication frequencies.

Hereinafter, the operation of a mobile terminal according to an embodiment of the present disclosure will be described when a first through a third tray corresponding to the foregoing first through third conditions are included in an image, for example. Such an example is given for the sake of convenience of explanation, and it should be understood by those skilled in the art that the foregoing first through third conditions can be modified in various ways. Otherwise, a larger or smaller number of trays than that of the foregoing first through third trays may be displayed on the touch screen 151.

Next, the process (S1350) of receiving a first touch applied to a first region of the image and a second touch applied to a second region of the image, and executing a function associated with a first graphic object selected by the first touch and a second graphic object selected by the second touch is performed. Screen information and an image covering part of the screen information are displayed on the touch screen 151 by a predetermined touch input, and different types of images are displayed in a plurality of regions of the displayed image. In other words, as a tray function is performed, a plurality of trays including different types of graphic objects are displayed on the touch screen 151. For example, graphic objects satisfying a first condition are displayed in a first region defined as a first tray, and graphic objects satisfying a second condition are displayed in a second region defined as a second tray.

Then, a user can select a first graphic object of any one of graphic objects displayed on the first tray, and select a second graphic object of any one of graphic objects displayed on the second tray, thereby executing a function associated with the first and the second graphic object. Thus, the controller 180 selects any one of graphic objects satisfying a first condition based on a first touch applied to a first region of a plurality of regions included in an image as a first graphic object. Then, the controller 180 selects any one of graphic objects satisfying a second condition based on a second touch extended from the first touch to move to one position of a second region of the plurality of regions as a second graphic object. When the second touch is released, the controller 180 executes a function associated with the first and the second graphic object.

As described above, graphic objects satisfying a first condition may correspond to different digital content, and graphic objects satisfying a second condition may correspond to different applications. In this instance, a function associated with a first graphic object satisfying the first condition and a second graphic object satisfying the second condition may be a function of displaying an execution screen of an application corresponding to the second graphic object on the touch screen 151 to transmit a digital content corresponding to the first graphic object to the outside. Here, a digital content corresponding to the first graphic object is automatically appended to the execution screen. As a result, a user can manipulate a mobile terminal to user a digital content that has been recently displayed or received from the outside on various applications.

On the contrary, graphic objects satisfying a first condition corresponds to different digital contents, and graphic objects satisfying a second condition corresponds to different contacts. In this instance, a function associated with a first graphic object satisfying the first condition and a second graphic object satisfying the second condition may be a function of transmitting a digital content corresponding to the first graphic object to a contact corresponding to the second graphic object. As a result, a user can simply transmit a digital content that has been recently displayed or received from the outside to the counterpart who has been frequently contacted or the other terminal that has been recently contacted.

Consequently, the controller 180 can execute a different type of function according to the type of a first graphic object satisfying the first condition and the type of a second graphic object satisfying the second condition, or organically execute a first function and a second function based on the first function defined on a first graphic object satisfying the first condition and the second function defined on a second graphic object satisfying the second condition.

Further, as a tray function is performed, a first tray including graphic objects satisfying the first condition, a second tray including graphic objects satisfying the second condition, and a third tray including graphic objects satisfying the third condition may be displayed on the touch screen. Then, the controller 180 can select any one of the graphic objects satisfying the first condition as a first graphic object based on a first touch applied to the first tray, and select any one of the graphic objects satisfying the second condition as a second graphic object based on a second touch extended from the first touch to move to one position of the second tray, and select any one of the graphic objects satisfying the third condition as a third graphic object based on a third touch extended from the second touch to move to one position of the third tray, and perform a function associated with the first through the third graphic object when the third touch is released.

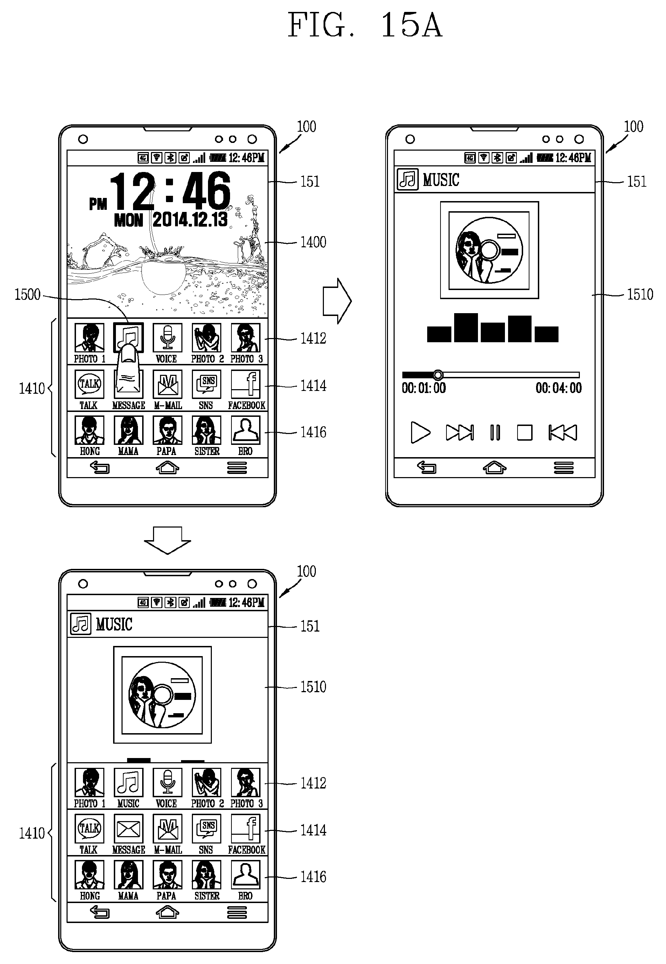

Hereinafter, the operation of a mobile terminal due to the foregoing control method illustrated in FIG. 13 will be described in detail. FIGS. 14 and 15A to 15E are conceptual views illustrating a control method illustrated in FIG. 13. Referring to FIG. 14, a home screen 1400 is displayed on the touch screen 151 of the mobile terminal. The home screen may include at least one object, and the object may be an icon or widget of an application installed in the mobile terminal. Screen information such as an execution screen, a standby screen or a lock screen corresponding to one or more functions may be displayed on the touch screen 151 as well as on the home screen page.

When a predetermined touch input consecutively moving in a direction from a lower end of the touch screen 151 to an upper end thereof is received when the home screen 1400 is displayed, an image 1410 covering part of the home screen 1400 is displayed. In other words, a tray function is performed by the predetermined touch input.

The image 1410 is divided into a plurality of regions 1412-1416, and each region is defined as a first through a third tray. The first through the third tray may include graphic objects associated with a digital content, an application, and a contact, respectively, and a user can reconfigure graphic objects included in the first through the third tray to execute various functions. Graphic objects satisfying the first condition are sequentially displayed in a right direction on the first tray 1412 with respect to a left end of the touch screen 151. The first condition is associated with a digital content recently received from the outside, transmitted to the outside, added by a user input, or output from the terminal. For example, "PHOTO 1" may be a most recently used digital image, and "MUSIC 1" may be a second recently used digital audio.

The first condition may be modified in various ways according to the setting of the terminal. For example, the setting of the terminal may be set to be limited to a graphic object corresponding to a digital content recently received from the outside as a graphic object satisfying the first condition. In another example, to limit a digital content added by a user input, the corresponding graphic object may be set to be displayed on the first tray. Here, a digital content added by a user input denotes a digital content set (or added) to be displayed by the user input.

The setting of the terminal may be changed by a user input, and the controller 180 can provide a user interface formed to change the setting of the terminal. Further, graphic objects satisfying the second condition are sequentially displayed in a right direction with respect to a left end of the touch screen 151. The second condition is associated with a recently executed application on which an event has occurred. For example, "TALK" may be a most recently used application, and "MESSAGE" may be a second recently used application. Similarly to the first condition, the second condition may be modified in various ways according to the setting of the terminal.

Graphic objects satisfying the third condition are sequentially displayed on the third tray 1416 with respect to a left end of the touch screen 151. The third condition is associated with a recently contacted contact set to Favorites, and the third condition may be modified in various ways according to the setting of the terminal. A user can execute a tray function to view recently used digital content, applications and contacts at a glance.

In addition, trays displayed on the touch screen according to the execution of a tray function may be added, deleted or edited by a user input. For example, when a first through a third tray are set, a fourth condition may be newly set by the user to add a fourth tray including graphic objects satisfying the fourth condition. Furthermore, when the first through the third tray are set, at least one tray may be deleted. When the first through the third tray are set, a condition set to any one tray may be edited with another condition. As a result, the user can use a mobile terminal as a means of expressing his or her personality to provide a user-friendly interface.

Further, when a touch applied to an end of the image 1410 consecutively moves to an end of the touch screen 151, the controller 180 ends the display of the image 1410. In other words, the touch screen 151 is controlled not to display the image 1410 covering part of the home screen 1400. Namely, the tray function may be ended by a predetermined user input.

Further, at least one graphic object is selected based on a touch input applied to the touch screen 151 when trays are displayed according to the execution of a tray function, and a function corresponding to the selected graphic object is performed when the touch input is released. For example, when trays are displayed, a touch may be applied to one position of the touch screen 151. When the touch applied to the one position is released, a function corresponding to the graphic object displayed at the one position is performed.

As illustrated in FIG. 15A, when a single touch is applied to the first tray 1412, a digital content corresponding to any one of graphic objects included in the first tray 1412 is displayed on the touch screen 151. Here, the digital content will be output again by a recently used application. For example, when digital content "MUSIC" is played by a music application associated with an on-line music service, a graphic object 1500 corresponding to "MUSIC" is displayed on the first tray 1412. When a single touch is applied to the graphic object 1500, the controller 180 can output digital content "MUSIC" again using the music application to display an execution screen 1510 of the music application on the touch screen 151. When the digital content is a video, a playback operation is started from a position at which the playback operation has been recently ended to output the relevant information in at least one of visual, auditory and tactile modes. Furthermore, when the digital content is a hypertext document, a linked document may be displayed on the touch screen. In other words, the selected digital content may be output in various ways according to the type of the digital content selected by a single touch.

In addition, when a single touch is applied to the second tray 1414, an application corresponding to any one of graphic objects included in the second tray 1414, and an execution screen of the relevant application is displayed on the touch screen 151. On the contrary, when a single touch is applied to the third tray 1416, information associated with a contact corresponding to any one of graphic objects included in the third tray 1416 is displayed on the touch screen 151.

When screen information corresponding to a specific graphic object is displayed on the touch screen 151 by a touch input applied to the tray, the controller 180 can end or maintain a tray function. For example, when the tray function is ended, the display of the image 1410 including trays is ended to display screen information 1510 corresponding to a specific graphic object on the touch screen 151. On the contrary, when the tray function is maintained, the controller 180 displays the image 1410 covering part of screen information 1510 and including trays on the touch screen 151 while at the same time displaying the screen information 1510 corresponding to the specific graphic object on the touch screen 151.

Further, a first touch is applied to one position of any one of a plurality of trays, and a second touch extended from the first touch to move to one position of another one of the plurality of trays may be applied to the touch screen 151. When the second touch is released, the controller 180 selects any one of graphic objects included in the any one tray as a first graphic object based on the first touch, and selects any one of graphic objects included in the another one tray as a second graphic object based on the second touch to execute a function associated with the first and the second graphic object.

A third touch moving to one position of still another one of the plurality of trays may be applied without releasing the second touch. When the third touch is released, the controller 180 selects any one of graphic objects included in the still another one tray as a third graphic object based on the third touch to execute a function associated with the first through the third graphic object selected based on the first through the third touch.

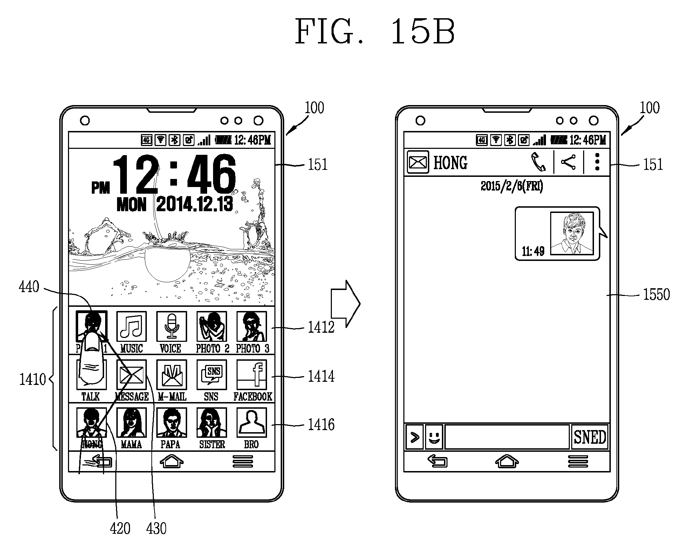

As illustrated in FIG. 15B, when a first touch is applied to the third tray 1416, any one 420 of graphic objects included in the third tray 1416 may be selected as a first graphic object based on the first touch. Then, when a second touch started from the first touch to consecutively move to one position of the second tray 1414, any one 430 of graphic objects included in the second tray 1414 is selected as a second graphic object based on the second touch. Then, when a third touch started from the second touch to consecutively move to one position of the first tray 1412, any one 440 of graphic objects included in the first tray 1412 is selected as a third graphic object based on the third touch.

Here, the first graphic object is associated with a contact "HONG", and the second graphic object is associated with an application "MESSAGE", and the third graphic object is associated with a digital content "PHOTO 1." When the third touch is released, the controller 180 executes an application corresponding to the second graphic object, and transmits a digital content corresponding to the third graphic object to a contact corresponding to the first graphic object. Accordingly, an execution screen 1550 of an application corresponding to the second graphic object is displayed on the touch screen 151, and a message for guiding that a digital content corresponding to the third graphic object has been transmitted on the execution screen 1550. The message may include information associated with a digital content included in the message, a time at which the message has been transmitted, and information associated with whether or not the message has been received.

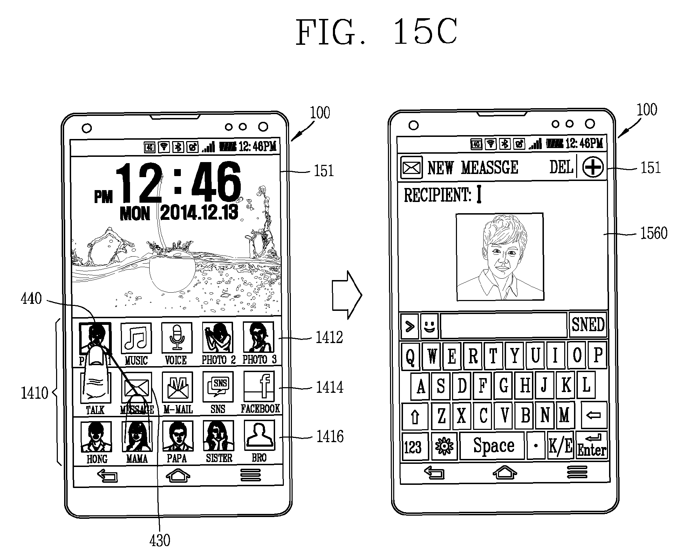

Further, as illustrated in FIG. 15C, when a first touch is applied to the second tray 1414, any one 430 of graphic objects included in the second tray 1414 may be selected as a first graphic object based on the first touch. Then, when a second touch started from the first touch to consecutively move to one position of the first tray 1412 is received, any one 440 of graphic objects included in the first tray 1412 is selected as a second graphic object based on the second touch.

Here, the first graphic object is associated with an application called "MESSAGE," and the second graphic object is associated with a digital content called "PHOTO 1." When the second touch is released, the controller 180 executes an application corresponding to an application corresponding to the first graphic object to transmit a digital content corresponding to the second graphic object to the outside. Accordingly, an execution screen 1560 of an application corresponding to the first graphic object is displayed on the touch screen 151, and a message for guiding that a digital content corresponding to the second graphic object has been appended to a message may be displayed on the execution screen 1560. Since the other contact at which the message is to be received is not specified, the execution screen 1560 may include an input window formed to receive the other contact. A cursor may be displayed on the input window, and a virtual keypad formed to input a numeral, a symbol, a text or the like at the cursor location may be displayed on the touch screen 151.

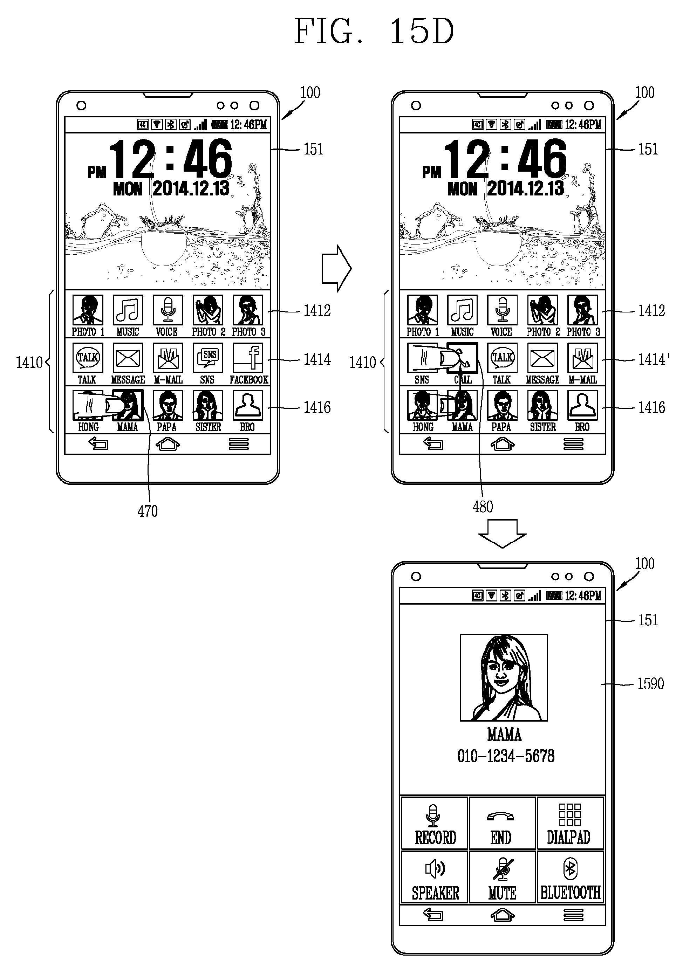

Further, as illustrated in FIG. 15D, when a first touch is applied to the third tray 1416, any one 470 of graphic objects included in the third tray 1416 is selected as a first graphic object based on the first touch. As described above, a graphic object corresponding to a contact which is a most recently transmitted or received subject or a contact registered with Favorites is displayed on the third tray 1416, and a graphic object corresponding to an application on which an event has recently occurred is displayed on the second tray 1414. However, when the first touch is applied to the third tray 1416, the controller 180 changes at least one of the type and location of graphic objects included in the second tray 1414.

Specifically, when a first graphic object is selected by a first touch applied to the third tray 1416, the controller 180 searches an application used to transmit or receive information to or from a contact corresponding to the first graphic object, and give a weight to a time or frequency at which the searched application has been used to change at least one of the type and location of graphic objects included in the second tray 1414. For example, graphic objects corresponding to applications that have been recently performed or on which events have been recently occurred are sequentially displayed on the second tray 1414 prior to applying a first touch ("TALK", "MESSAGE", "M-MAIL", "SNS", "FACEBOOK"). Then, when a first touch is applied, the controller 180 sequentially selects applications that have transmitted data to a contact called "MAMA" based on at least one of their used time and used frequency, and displays graphic objects corresponding to the selected applications on the second tray 1414' ("SNS", "CALL", "TALK", "MESSAGE", "M-MAIL"). Accordingly, the type and lactation of graphic objects displayed on the second tray vary according to at least one of their used time and used frequency.

Then, when a second touch started from the first touch to consecutively move to one position of the second tray 1414', any one 480 of graphic objects included in the second tray 1414' is selected as a second graphic object based on the second touch. Here, the first graphic object is associated with a contact called "MAMA," and the second graphic object is associated with an application called "CALL."

When the second touch is released, the controller 180 executes a function corresponding to the second graphic object with respect to a contact the first graphic object. More specifically, the controller 180 executes a transmission function which is a function corresponding to "CALL" to a contact called "MAMA." Accordingly, an execution screen 1590 of an application corresponding to the second graphic object is displayed on the touch screen 151. The execution screen 1590 may include graphic objects linked with information associated with the other contact and additional functions associated with transmission.

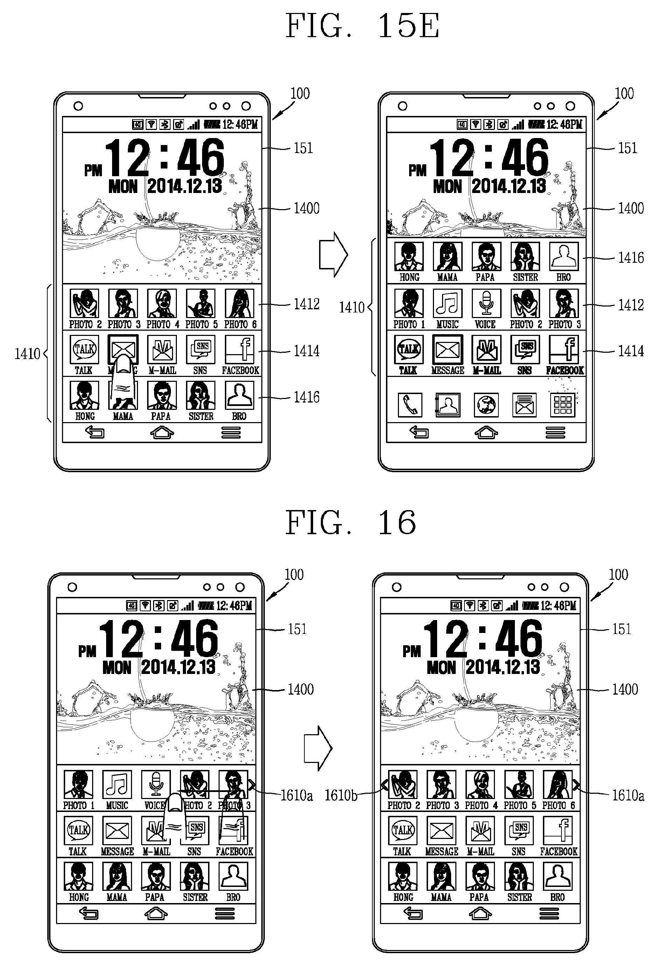

Further, as illustrated in FIG. 15E, a first touch may be applied to the second tray 1414 located at the center when the first through the third tray 1412-1416 are displayed on the touch screen 151. In other words, a first touch may be received at the second tray 1414 located between the first tray 1412 and the third tray 1416 when the third through the first tray 1416-1412 are displayed in a stacked manner in an upper end direction with respect to a lower end of the touch screen 151. When the first touch is maintained without being released for a reference period of time, the controller 180 can change at least one display location of the first through the third tray 1412-1416. For example, the display location of the third tray 1416 may be changed from a lower end of the second tray 1414 to an upper end of the first tray 1412.

It is to easily select graphic objects included in the first through the third tray 1412-1416 using a single drag input. When a second touch started from a first touch to consecutively move to one position of the first tray 1412 moves to one position of the first tray 1412 when the first touch is applied to the second tray 1414 located at the center, a third touch started from the second touch to move to one position of the third tray 1416 should pass through the second tray 1414 again. However, according to an embodiment of the present disclosure, the third touch is not required to pass through the second tray 1414 again since the display location of the third tray 1416 is changed from a lower end of the second tray 1414 to an upper end of the first tray 1412, thereby relatively decreasing a moving distance of the third touch.

Further, when any one of a plurality of graphic objects included in a tray is selected by a touch, the selected graphic object may be highlighted to distinguish it from the non-selected remaining graphic objects. For example, as illustrated in FIG. 15E, a graphic object selected from the second tray 1414 by a first touch may be in a bold manner and the non-selected graphic objects are displayed in a light manner, and thus a first graphic object may be displayed to be distinguished from the other graphic objects included in the second tray 1414.

As described above with respect to FIGS. 15A through 15E, various function can be simply performed according to a touch input applied to the tray. In particular, since trays includes graphic objects associated with digital content, applications and contacts that have been recently used by a user, the user can select at least one graphic object desired to be used, thereby his or her desired function in a fast and convenient manner.

Next, FIG. 16 is a conceptual view illustrating an operation according to a drag input applied to any one of a plurality of regions on an image displayed by a predetermined touch input in a mobile terminal according to an embodiment of the present disclosure. As illustrated in FIG. 16, a touch input moving from one position of any one of trays to another position of the any one of the trays may be received when the plurality of trays are displayed. The controller 180 can change the type of graphic objects displayed on the any one tray in response to the touch input.

For example, when there are ten graphic objects that can be included in the any one tray, only a predetermined number of graphic objects (for example, five) may be displayed on the any one tray due to the physical restriction of the touch screen 151. In other words, since a condition for displaying graphic objects is previously set to the any one tray, the controller 180 arranges graphic objects based on the predetermined condition, and selectively displays a predetermined number of graphic objects on the any one tray according to the arrangement order. Here, the controller 180 can change the type of graphic objects displayed on any one tray based on a drag input received within the any one tray.

Further, when there are non-displayed graphic objects on any one tray, the controller 180 can display images 1610a, 1610b for guiding that there exist non-displayed graphic objects within the any one tray. Through this, a user can recognize that there exist non-displayed graphic objects, and apply a user input to display the non-displayed graphic objects.

An operation based on a user input applied to an image when the image is displayed by a predetermined touch input will be described with reference to FIGS. 14 through 16. Further, a mobile terminal according to an embodiment of the present disclosure may display an image in response to a predetermined touch input when screen information is displayed, and perform various operations according to a user input consecutively applied to the screen information and the image.

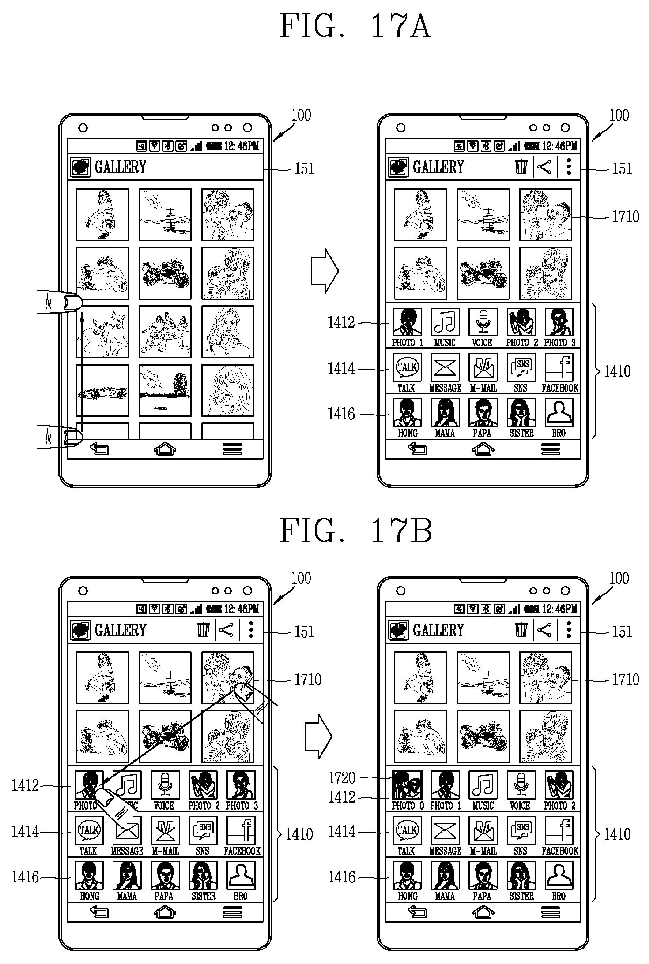

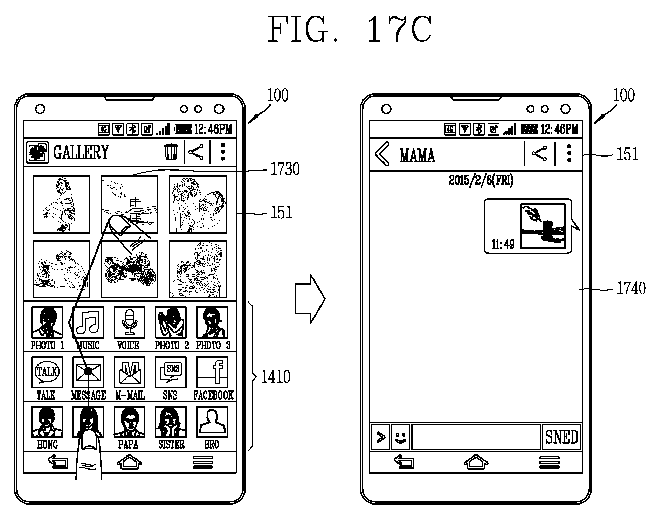

Next, FIGS. 17A, 17B and 17C are conceptual views illustrating an operation according to a user input applied to screen information and an image when the image is displayed by a predetermined touch input according to an embodiment of the present disclosure. Screen information including a plurality of contents may be displayed on the touch screen 151. Here, the contents denote all objects that can be displayed on the touch screen 151 of the mobile terminal 100. For example, the contents may include a menu icon for selecting a function that can be performed on the mobile terminal 100, a multimedia icon for playing video data or music data that can be played back on a portable terminal, an image displayed on the mobile terminal 100, a thumbnail image indicating an image stored in the mobile terminal 100, a data name set to each of various data, a memo stored in the memory, and the like. Furthermore, the contents may be displayed with images, texts or the like.

As illustrated in FIG. 17A, screen information including images stored in the memory 170 in a list format may be displayed on the touch screen 151. When a predetermined touch input is applied, a tray function is performed. In other words, an image covering part of the screen information is displayed, a plurality of trays are displayed on the image. In addition, a graphic object corresponding to a digital content that can be displayed in at least one of visual, auditory and tactile modes is displayed on the first tray of the plurality of trays.

Further, a touch input started from one position of the screen information to consecutively move to one position of the first tray may be received in a state the screen information and image (or a plurality of trays) are displayed. For example, as illustrated in FIG. 17B, a touch input for dragging and dropping any content 1710 included in screen information into the first tray 1412 may be applied. The controller 180 can add a graphic object 1720 corresponding to the content 1710 displayed at the one position to the first tray in response to the drag-and-drop. Accordingly, the display location of graphic objects that have been displayed prior to adding a graphic object 1720 is changed. In other words, the display location of graphic objects included in the first tray 1412 moves to the right by one column, and the display of any graphic object that has been displayed adjacent to a right end thereof is ended.

Further, a touch input started from one position of the screen information to consecutively move to one position of the second tray may be received when the screen information and image (or a plurality of trays) are displayed. For example, referring to FIG. 17C, a touch input for dragging any content 1730 included in screen information to the second tray 1414 may be applied. When the drag is released from one position of the second tray 1414, the controller 180 executes a function associated with a graphic object displayed at one position of the second tray 1414 in connection with the any content 1730.

When the drag consecutively moves to the third tray 1416 to be released without being released from one position of the second tray 1414, the controller 180 organically combines and executes a function associated with a graphic object displayed at one position of the second tray 1414 an a function associated with a graphic object displayed at one position of the third tray 1416 with the any content 1730.

Specifically, as illustrated in FIG. 17C, a touch input started from one position of the screen information to consecutively move to one position of the third tray may be received. The controller 180 can select any content 1730 displayed at one position of the screen information, and select a first graphic object ("MESSAGE") from the second tray 1414, and select a second graphic object ("MAMA") from the third tray 1416 based on the touch input. Since a content displayed on the screen information is selected, a graphic object is not selected from the first tray 1412.

When the touch input is released, the controller 180 transmits the any content 1730 to the counterpart corresponding to the second graphic object using an application corresponding to the first graphic object. Accordingly, an execution screen 1740 of an application corresponding to the first graphic object is displayed on the touch screen 151, and a graphic object corresponding to the content 1730 transmitted to the counterpart ("MAMA") corresponding to the second graphic object is included in the execution screen 1740.

As described above, a mobile terminal according to an embodiment of the present disclosure may perform various functions based on a touch input applied within a tray as well as a drag input moving into the tray out of the tray. Accordingly, it may be possible to provide a more convenient user interface.

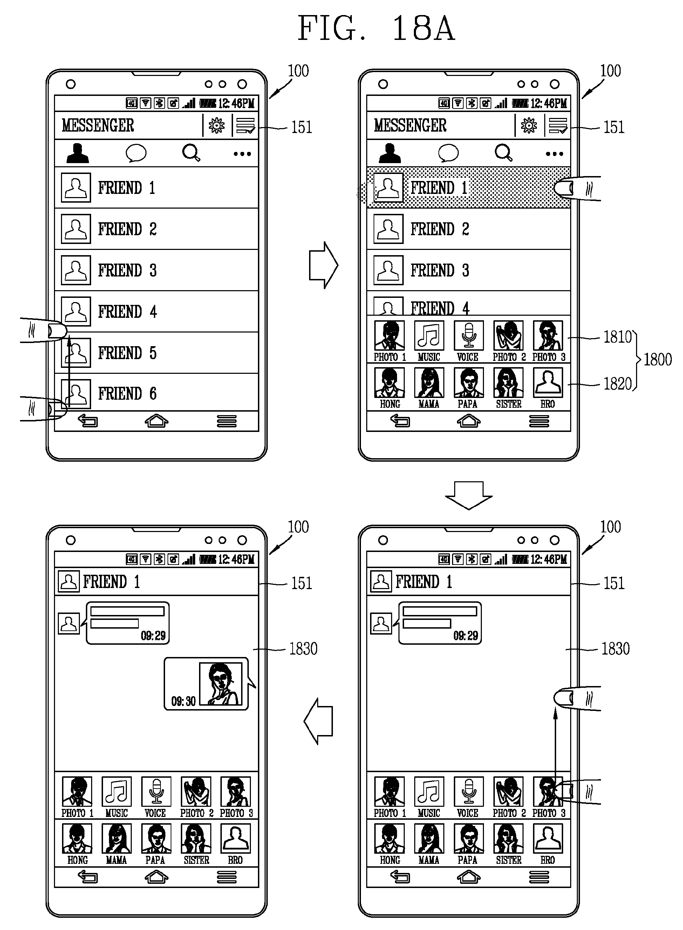

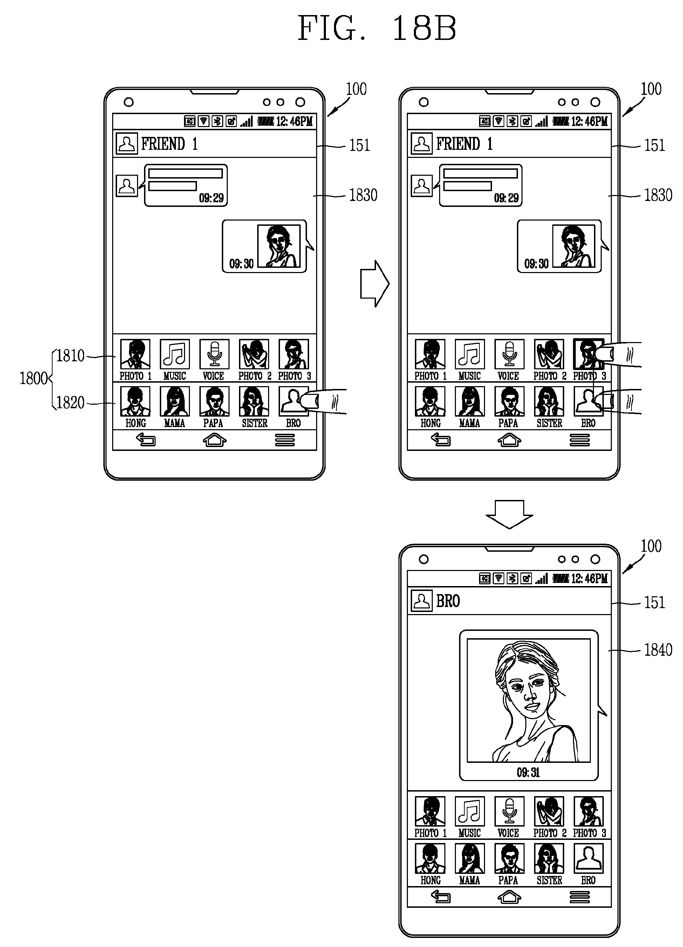

Next, FIGS. 18A and 18B are conceptual views illustrating an operation of changing the type of graphic objects displayed on an image according to the type of screen information when the image is displayed by a predetermined touch input when the screen information is displayed on a mobile terminal according to an embodiment of the present disclosure.

A mobile terminal according to an embodiment of the present disclosure may display different types of trays according to the type of screen information displayed on the touch screen 151 at a time point at which the predetermined touch input is applied. For example, when a predetermined touch input is applied when a home screen is displayed, the foregoing first through third trays may be displayed. On the contrary, when a predetermined touch input is applied when screen information associated with a messenger is displayed, trays totally different from the first through the third tray may be displayed or a fourth tray including graphic objects satisfying a new fourth condition may be displayed along with the first tray.

For an example, as illustrated in FIG. 18A, when a predetermined touch input is received when screen information associated with a messenger is displayed, the controller 180 can display an image 1800 covering part of the screen information. A first tray 1810 including graphic object satisfying a first condition and a fourth tray 1820 including graphic objects satisfying a fourth condition may be displayed on the image 1800.

Here, the messenger denotes an application capable of transmitting and receiving messages and data using the Internet or the like. It is also called an instant messenger due to the meaning of instant transfer, and recently provided social network services are also included in the messenger. Multilateral chat and voice chat services are supported by the messenger, and various contents including large video files may be transmitted and received through the messenger.

Further, the description of a first tray 1810 has been described above with reference to FIG. 13 and the like, and the detailed description thereof will be omitted. A predetermined number of graphic objects satisfying a fourth condition are displayed on a fourth tray. Here, the fourth condition is associated with the other contact that has transmitted and received data using a messenger. More specifically, the controller 180 determines the sequence of the other contacts that have transmitted and received data using the messenger according to a predetermined criteria, and displays graphic objects corresponding to a predetermined number of the other contacts on the fourth tray according to the sequence.

A third condition set to the third tray is regardless of the type of a messenger, but a fourth condition set to a fourth tray is distinguished from the third condition since it is associated with the other contact that has transmitted and received data using a specific messenger. For example, it may be configured such that the third condition specifies the other contact that has frequently transmitted and received data by collectively considering a frequency at which calls have been made, a frequency at which texts have been transmitted and received, a frequency at which mails have been transmitted and received, and the like, but the fourth condition specifies the other contact that has frequently transmitted and received data by considering only a frequency at which data has been transmitted and received on a specific messenger.

In other words, when a predetermined touch is applied when the screen information of a first messenger application is displayed, graphic objects satisfying a condition in consideration of a frequency at which data has been transmitted and received on the first messenger application are displayed on the fourth tray. On the contrary, when a predetermined touch is applied when the screen information of a second messenger application is displayed, graphic objects satisfying a condition in consideration of a frequency at which data has been transmitted and received on the second messenger application are displayed on the fourth tray. As a result, graphic objects displayed on the fourth tray vary according to the type of the executed messenger.

Further, when a single touch is applied to any one of graphic objects included in the fourth tray, the controller 180 can display a dialog window for displaying messages that have been transmitted to and received from a contact corresponding to the any one graphic object on the touch screen 151. A user can quickly access a dialog window of the counterpart who has been frequently contacted using the fourth tray.

Further, when a specific contact is selected from a messenger, a dialog window for displaying messages that have been transmitted to and received from the selected contact is displayed as screen information. For example, as illustrated in FIG. 18A, when any one contact ("FRIEND 1") is selected by a touch when a plurality of contacts are displayed ("FRIEND 1" through "FRIEND 6"), a dialog window 1830 for displaying messages that have been transmitted to and received from the selected contact is displayed on the touch screen 151.

When a specific dialog window is displayed along with trays, the controller 180 limits digital contents that have been transmitted and received on the specific dialog window from being displayed on the first tray. For example, when an image called "photo 0" is recently received by a messenger from "mama", a graphic object corresponding to "photo 0" should be newly added to the first tray. However, since the image called "photo 0" is a digital content that has been previously shared with "mama"0, it is not required to share it again with "mama." When a dialog window with "mama" is displayed on the touch screen 151 in the messenger, a graphic object corresponding to "photo 0" is not necessarily displayed on the first tray. Accordingly, when a specific dialog window is displayed on the touch screen 151, the controller 180 limits a graphic object corresponding to a digital content that has been transmitted and received on the specific dialog window from being displayed on the first tray.

Further, when a touch input consecutively moving from one position of the first tray to one position of the dialog window is received, the controller 180 selects any one of graphic objects included in the first tray based on the touch input, and transmits a digital content corresponding to the selected graphic object to the dialog counterpart of the dialog window.

For example, as illustrated in FIG. 18A, a dialog window 1830 on which "FRIEND 1" is set to the dialog counterpart, and the first and the fourth tray 1810, 1820 may be displayed on the touch screen 151. When a touch input for dragging and dropping any one ("PHOTO 1") of graphic objects included in the first tray 1810 to the dialog window 1830 is received, the controller 180 can transmit a digital content corresponding to "PHOTO 1" to "FRIEND 1", and display the transmission result in a message format on the dialog window 1830.

Further, when a touch input consecutively moving from one position of the first tray to one position of the fourth tray (or a touch input consecutively moving from one position of the fourth tray to one position of the first tray) is received, the controller 180 selects any one of graphic objects included in the first tray as a first graphic object, and selects any one of graphic objects included in the second tray as a second graphic object based on the touch input. Furthermore, the controller 180 transmits a digital content corresponding to the first graphic object to the dialog counterpart corresponding to the second graphic object, and displays a dialog window associated with the dialog counterpart corresponding to the second graphic object on the touch screen 151.

For example, as illustrated in FIG. 18B, a touch input consecutively moving from one position of the fourth tray to one position of the first tray may be received when the first dialog window 1830 with "FRIEND 1" as the dialog counterpart is displayed along with the first and the fourth tray 1810, 1820. In this instance, the controller 180 can transmit a digital content corresponding to "PHOTO 3" to the dialog counterpart corresponding to "BRO," and display a chatting window 1840 with "BRO" as the dialog counterpart on the touch screen 151. A user can simply use a recently used content on various applications using trays as well as share it with a third person in a convenient and fast manner.

According to at least one of the embodiments of the present disclosure, a user can visually check screen information that have been previously displayed for each application, and selectively use any one of the screen information. Accordingly, the user's convenience is enhanced.

Furthermore, a mobile terminal according to an embodiment of the present disclosure can display graphic objects satisfying different conditions in a first and a second region, respectively, and receive a selection of any one of graphic objects contained in the first region as a first graphic object, and any one of graphic objects contained in the second region as a second graphic object based on a touch input consecutively moving from the first region to the second region, and execute functions linked with the selected first and second graphic objects in an organic combined way. Accordingly, the user can execute various functions using a simple interface in an easy and fast manner.

Further, graphic objects associated with most recently displayed or transmitted and received digital content are displayed in the first region, and graphic objects associated with most recently executed applications in the second region. Accordingly, the user can use a recently used function again in a convenient manner, and execute a function that has been performed in combination with another function in a novel manner without simply re-executing the function. Furthermore, the user can simply transmit recently used digital content to a third person.

The foregoing present invention may be implemented as codes readable by a computer on a medium written by the program. The computer-readable media may include all kinds of recording devices in which data readable by a computer system is stored. Examples of the computer-readable media may include hard disk drive (HDD), solid state disk drive (SSD), ROM, RAM, CD-ROM, magnetic tape, floppy disk, and optical data storage device, and the like, and also include a device implemented in the form of a carrier wave (for example, transmission via the Internet). In addition, the computer may include the controller 180 of the mobile terminal. Accordingly, the detailed description thereof should not be construed as restrictive in all aspects but considered as illustrative. The scope of the invention should be determined by reasonable interpretation of the appended claims and all changes that come within the equivalent scope of the invention are included in the scope of the invention.

## Claims

1. A mobile terminal (100), comprising:
a wireless communication unit (110) configured to provide wireless communication;
a touch screen (151) configured to display a plurality of icons; and
a controller (180) configured to:
receive a predetermined touch input on a first icon of the plurality of icons, said predetermined touch input being different than a touch input for executing an application corresponding to the first icon, and
display at least one graphic object on the touch screen (151) representing an event that has occurred with respect to the application corresponding to the first icon.

2. The mobile terminal (100) of claim 1, wherein the controller (180) is further configured to:
display a home screen including the plurality of icons, and
display an image including the at least one graphic object partially covering the home screen, in response to the received predetermined touch input.

3. The mobile terminal (100) of claim 2, wherein when a plurality of events have occurred on the application corresponding to the first icon, the controller (180) is further configured to display a plurality of graphic objects representing the plurality of events in a time sequence at which the events occurred.

4. The mobile terminal (100) of claim 3, wherein the controller (10) is further configured to:
receive a touch input on a first graphic object of the displayed plurality of graphic objects, and
display an execution screen related to the first graphic object.

5. The mobile terminal (100) of claim 4, wherein the controller (180) is further configured to scroll the plurality of graphic objects in response to a rotationally touch and drag on the image including the plurality of graphic objects.

6. The mobile terminal (100) of any one of claims 1 to 5, wherein the predetermined touch input comprises a circular touch and drag on the first icon.

7. The mobile terminal (100) of any one of claims 1 to 6, wherein the controller (180) is further configured to:
display a plurality of time indices indicating a time on the touch screen (151),
receive a touch input applied to at least one of the plurality of time indices, and
display only graphic objects corresponding to events that have occurred within a time period defined by the touch input applied to the at least one of the plurality of time indices.

8. The mobile terminal (100) of any one of claims 1 to 7, wherein the controller (180) is further configured to display the at least one graphic object while the predetermined touch input in maintained without being released, and stop displaying the at least one graphic object when the predetermined touch input is released.

9. The mobile terminal (100) of any one of claims 1 to 8, wherein the controller (180) is further configured to:
receive a touch input on the at least one graphic object,
display an external terminal graphic object indicating an external terminal, and
transmit event information about the event that has occurred with respect to the application to the external terminal in response to the touch input being dragged to the external terminal graphic object.

10. The mobile terminal (100) of claim 9, wherein the controller (180) is further configured to:
display an application graphic object indicating a communication application, and
transmit the event information to the external terminal using the communication application in response to the touch input being dragged to the application graphic object.

11. The mobile terminal (100) of claim 1, wherein the controller (180) is further configured to display the at least one graphic object in a first portion of the touch screen (151) and display screen information previously displayed on the touch screen (151) in a second portion different than the first portion.

12. The mobile terminal (100) of claim 11, wherein the controller (180) is further configured to:
receive a touch input of the at least one graphic object, and
display an execution screen of an application corresponding to the at least one graphic object in the second portion in response to the received touch input.

13. A method for controlling a mobile terminal, comprising:
receiving a predetermined touch input on a touch screen;
displaying a first tray of graphic objects satisfying a first condition in a first region of the touch screen and a second tray of graphic objects satisfying a second condition in a second region of the touch screen;
receiving a touch and drag input from one graphic object in the first tray to another graphic object in the second tray; and
performing a function associated with the one graphic object in the first tray and the other graphic object in the second tray when the touch and drag input is released.

14. The method of claim 13, further comprinsg:
displaying a third tray of graphic objects satisfying a third condition in a third region of the touch screen,
wherein the touch and drag input is from the one graphic object in the first tray to the other graphic object in the second tray and then to a graphic object in the third tray.

15. The method of claim 14, wherein the graphic objects satisfying the first condition are associated with different digital contents that can be output in any one of visual, auditory and tactile modes, the graphic objects satisfying the second condition are associated with different communication applications, and the graphic objects satisfying the third condition are associated with contacts, a digital content corresponding to the one graphic object in the first tray is transferred to a corresponding contact to the graphic object in the third tray using a communication application corresponding to the graphic object in the second tray in response to the touch and drag input as the function is performed.
